# EUROPÄISCHE PATENTSCHRIFT

(11) **EP 0 652 183 B1**
(45) Veröffentlichungstag und Bekanntmachung des Hinweises auf die Patenterteilung: **29.07.1998**
(21) Anmeldenummer: 94115406.4
(22) Anmeldetag: 29.09.1994
(51) Int. Cl.: C02F 3/34

(54) **Anlage und Verfahren zur Aufarbeitung von organische und anorganische Materie enthaltendem Abwasser**
Installation and process for treating organic and inorganic matter containing waste water
Installation et procédé pour traiter de l'eau usée contenant des matières organiques et inorganiques

(30) Priorität: 30.09.1993 DE 4333331
(43) Veröffentlichungstag der Anmeldung: 10.05.1995
(73) Patentinhaber: Elsner, Egon R., 74235 Erlenbach (DE)
(72) Erfinder: Elsner, Egon R., 74235 Erlenbach (DE)
(74) Vertreter: Oechssler, Dietrich, Dr. rer. nat.

(56) Entgegenhaltungen:
- EP-A- 0 503 546
- WO-A-80/02282
- DE-A- 3 826 519
- FR-A- 2 175 737
- US-A- 3 994 803

## Beschreibung

Die Erfindung betrifft eine Anlage zum Aufarbeiten von organische und anorganische Materie enthaltendem Abwasser, insbesondere von einem solchen, das, wie beispielsweise Gülle, hoch mit organischer, stickstofhaltiger Materie belastet ist, mit einer mikrobiologischen Behandlungsstufe, durch welche das Abwasser strömt und welche mindestens ein Aggregat aufweist, das Mittel enthält, auf deren Oberfläche Bakterien sich vermehren und akkumulieren können, wobei die Mittel die Bakterien kontrolliert an das Abwasser abgeben können, und ein Verfahren zum Aufarbeiten eines solchen Abwassers insbesondere unter Verwendung einer Anlage wie der genannten.

Unter "vermehren" wird in diesem Zusammenhang die Vergrößerung einer Bakterienpopulation auf den Mitteln durch Zweiteilung Knospung oder Sprossung und unter "akkumulieren" die Ablagerung von Bakterien enthaltendem Schlamm auf den Mitteln verstanden.

Verfahren zum Aufarbeiten von Abwässern sind bekannt und werden in großem Umfang beispielsweise zur Klärung von kommunalen Abwässern eingesetzt. Es wird in diesem Zusammenhang auf die in dem Buch von L.A. Hütter "Wasser und Wasseruntersuchung" (Verlage: O.Salle und Sauerländer), 5. Aüfläge, 1992, Seiten 211 bis 242 gegebenen Übersicht hingewiesen.

Moderne Kläranlagen bestehen aus drei aufeinanderfolgenden Klärstufen: einer mechanischen, einer mikrobiologischen und einer chemischen Stufe. In der mechanischen Stufe werden durch Herausfischen, Abrechen und Ablagern grobe Bestandteile, Sand und schlammige Stoffe aus dem Wasser entfernt. Die mikrobiologische Stufe, bei der Mikroorganismen aktiv sind, arbeitet meistens nach dem "Belebungsverfahren", wobei das Abwasser in einem Belebungsbecken mittels eines Gebläses mit Sauerstoff angereichert wird. Als Folge des Angebots an Sauerstoff und an organischen Schmutzstoffen, vermehren sich aerobe Bakterien sehr schnell. Diese künstliche Anreicherung bewirkt, daß in kommunalen Abwässern der Reinigungsprozeß innerhalb weniger Stunden abläuft. Der sich dabei bildende Schlamm setzt sich im folgenden Nachklärbecken am Boden ab. Von dort wird er in den Schlammfaulturm gepumpt, dem auch der aus der mechanischen Stufe stammende Rückstand zugeführt wird. Ein geringer Teil des an Mikroorganismen reichen Schlamms wird in das Belebungsbecken zurückgeführt, damit in dem neu eingeleiteten Abwasser gleich eine große Anzahl von den Abbau der organischen Materie unterstützenden Mikroorganismen vorliegt. Im Schlammfaulturm läuft der mikrobiologische Abbau unter anareroben Bedingungen weiter. Das Klarwasser, das nach der mikrobiologischen Reinigung aus dem Nachklärbecken abfließt, enthält noch Nährsalze, wie Nitrat und Phosphat. In der chemischen Stufe werden diese Salze durch Zugabe von Stoffen, wie Aluminiumsulfat, Eisenchlorid und Kalk, ausgefällt.

In der mikrobiologischen Stufe laufen u.a. folgende chemische Reaktionen ab:
1) Unter aeroben Bedingungen in Gegenwart von aeroben Bakterien und von Sauerstoff erfolgt der Abbau von organischen Verbindungen, wobei sich organisch gebundener Kohlenstoff entsprechend der Gleichung (I)

   C_{Org.}+5O₂ --- 5CO₂. (I)

   in CO₂ und der Amin-Stickstoff in Ammoniak umwandelt. Unter dem Einfluß von als Nitrifikanten bezeichneten Bakterien wandelt sich Amoniak entsprechend der Gleichung (II)

   NH₄⁺ + 1,5O₂ --- NO₂⁻ + H₂O + 2H⁺ (II)

   durch Reaktion mit Sauerstoff in Nitrit um, welches entsprechend der Gleichung (III)

   NO₂⁻ + 0,5O₂ --- NO₃⁻ (III)

   mit Sauerstoff zu Nitrat reagiert.
2) Unter anaeroben Bedingungen werden organisch gebundener Kohlenstoff gemäß der Gleichung (IV)

   HC_{Org.} + O₂ --- CH₄ + CO₂ (IV)

   im wesentlichen in Methan und CO₂ umgewandelt, wobei der notwendige Sauerstoff aus vorhandenen organischen oder anorganischen Verbindungen entnommen wird. Zu diesen anorganischen Verbindungen gehören auch das Nitrat, welches in Anwesenheit von sogenannten fakultativen Anaerobiern unter Umwandlung in Stickstoff seinen Sauerstoff abgibt, wobei die Gleichung (V) die Gesamtreaktion wiedergibt:

   4H⁺ + 5C + 4NO₃⁻ --- 5CO₂ + 2N₂ + 2H₂O (V).

Fakultative Anaerobier sind Bakterien, welche unter aeroben aber auch unter anaeroben Bedingungen existieren und sich vermehren können. Von dem oben beschrieben Verfahren gibt es viele bekannte Abweichungen. Beispielsweise kann die Reihenfolge der Stufen geändert werden.

Als Alternative zum Belebungsbecken oder auch zusätzlich zu ihm sind Tropfkörperanlagen bekannt, bei denen es sich um oben offene zylinderförmige Bauwerke handelt, die eine lockere Aufschüttung von Gesteinsbrocken oder eine große Anzahl von übereinander im Abstand von 1 bis 2cm montierten Kunststoffscheiben aufweisen. In den Tropfkörperanlagen rieselt das Abwasser über einen auf den Gesteinsbrocken oder den Kunsstoffscheiben gewachsenen biologischen Rasen, d.h. eine Bakterien- und Organismenschicht. Die nötige Belüftung erfolgt durch die Kaminwirkung des Bauwerks.

Die Elemente zum Aufwachsen in Tropfkörperanlagen bzw. vergleichbaren Anlagen können verschiedenartige Ausbildungen aufweisen. So ist beispielsweise aus der FR-A-2 175 737 eine Anlage bekannt, bei der eine Vielzahl von in Abständen und vertikal angeordneten, perforierten Elementen vorhanden ist auf die das zu reinigende Wasser von oben aufgesprüht wird, das dann entlang der Oberflächen dieser perforierten Elemente in Form eines dünnen Wasserfilms nach unten fließt und durch die biochemische Wirkung der auf diesen perforierten Elementen gewachsenen Organismen gereinigt wird.

Es ist auch bekannt, das Schlamm und Flüssigkeit enthaltende Abwassergemisch einen Kreisprozeß durchlaufen zu lassen, in dem es unter aeroben und anaeroben Bedingungen behandelt wird.

Die beschriebene Kläranlage und die genannten Varianten arbeiten bei der Reinigung üblicher, vorallem kommunaler und industrieller Abwässer im allgemeinen recht zufriedenstellend. Gemeinsam ist diesen Abwässern, daß die Belastung mit organischer, insbesondere stickstoffhaltiger Materie, relativ niedrig ist. Schwierigkeiten treten auf, wenn in der Landwirtschaft anfallende Abwässer, wie z.B. Jauchen und Güllen aufgearbeitet werden sollen, weil diese sehr hoch mit organischer, insbesondere auch mit stickstoffhaltiger Materie belastet sind. Dabei wird die wirtschaftliche und umweltfreundliche Beseitigung gerade dieser Abwässer zunehmend ein Problem, das dringend gelöst werden muß.

Um große Mengen Schlachtvieh produzieren zu können, wird vor allen Dingen in den Industrieländern mit steigender Tendenz Mastvieh in großen Stückzahlen auf kleinstem Raum gemästet. Als Folge hiervon fallen große Mengen an Gülle an. Auf landwirtschaftlich genutzte Flächen kann diese Gülle nicht mehr unbegrenzt ausgebracht werden, denn Untersuchungen bestätigen, daß im Trink- und Grundwasser viel zu hohe, eindeutig auf Überdüngung mit Wirtschaftsdünger (Gülle) und Kunstdünger zurückzuführende Nitratmengen vorhanden sind. Deshalb muß derzeit schon - und in Zukunft verstärkt - mit hohem Kostenaufwand Gülle vernichtet werden. Es kann auch gesagt werden, daß unter hohen Kosten ein hochwertiges Wirtschaftsgut vernichtet werden muß. Dabei wird für die Herstellung von Kunstdüngern Ammoniak synthetisch teuer hergestellt. Darüber hinaus geht bei Nichteinsatz der Gülle die für den Landbau so wichtige Bodenmikrobiologie verloren. Um das Wirtschaftsgut Gülle nicht vernichten zu müssen, sondern dem Landbau - ohne daß Umweltschäden entstehen - wieder verfügbar zu machen, werden deshalb Verfahren gebraucht, um die Gülle so zu konditionieren, daß sie dem Landwirt bedenkenlos wieder in die Hand gegeben werden kann. Die Konditionierung sollte dabei soweit gehen, daß der Dünger an die speziellen Bedürfnisse der damit behandelten Pflanzen angepaßt ist. Ein solcher Dünger hätte den Vorteil, daß nur soviel von ihm ausgebracht werden muß, wie die Pflanzen wirklich benötigen, das heißt, daß der Boden nicht übermäßig belastet, wird, was der Umwelt und den Pflanzen zugute kommt. Die Folge wären gesündere Pflanzen, die dadurch und auch aufgrund der in einem solchen Dünger enthaltenen Bodenmikrobiologie gegenüber Schädlingen resistenter sind. Dies würde zusätzlich erlauben, die Behandlung mit Pestiziden allmählich einzuschränken, was nicht nur den Pflanzen und sondern auch der Umwelt zugute käme.

Es ist deshalb die Aufgabe der Erfindung, eine Anlage und ein Verfahren anzugeben, um relativ hoch mit organischen, und anorganischen, insbesondere auch stickstoffhaltigen Materialien belastete Abwässer wirtschaftlich zu reinigen.

Diese Aufgabe wird mit einer Anlage der eingangs genannten Art, die zum chargenweisen Aufarbeiten des Abwassers dient, und bei der mindestens ein mikrobiologischer Reaktor mit einem Zufluß und einem Abfluß für das Abwasser vorgesehen ist, der gegebenenfalls belüftet werden kann und an den das genannte Aggregat mindestens mittels einer separaten, bevorzugt aus einer Ringleitung bestehenden Verbindung angekoppelt ist, über die Abwasser vom Reaktor zum Aggregat und umgekehrt geleitet werden kann, wobei die Mittel umspült werden und mit einem Verfahren der eingangs genannten Art gelöst, bei dem das Abwasser chargenweise behandelt wird, bei dem in einer mikrobiologischen Behandlungsstufe, durch die das aufzuarbeitende Abwasser strömt, ein in der mikrobiologischen Behandlungsstufe abgezweigter Teil des Abwassersstroms Mittel umspült, auf deren Oberfläche Bakterien durch Vermehren und Akkumulieren aufgewachsen sind, und bei dem dabei - gegebenenfalls unter Anwendung mechanischer Energie - Bakterien kontrolliert von den Mitteln abgelöst und in das umspülende Abwasser gebracht werden, wobei das Vermehren und Akkumulieren der Bakterien auf den genannten Mitteln bei der vorangehenden bzw. den vorangehenden mikrobiologischen Behandlungen von Abwasserchargen durchgeführt worden sind, die im wesentlichen identisch wie das zu reinigende Abwasser zusammengesetzt waren, so daß die aufgewachsenen Bakterien an das aufzuarbeitende Abwasser angepaßt sind.

Bei der mikrobiologischen Behandlungsstufe, die wie oben beschrieben ausgestattet ist, findet die Reinigung des Abwassers hauptsächlich im Reaktor statt, während das Abtrennen der Bakterien von den Mitteln und das erneute Aufwachsen der Bakterien auf den Mitteln relativ ungestört hiervon abläuft. Während der Behandlung einer Charge werden die Mittel ständig mit Abwasser aus dem Reaktor umspült, damit sich - zur Verwendung bei der folgenden Charge - wieder Bakterien auf den Mitteln akkumulieren können. Dies läßt sich besonders einfach bewerkstelligen, wenn der Reaktor über eine Ringleitung mit dem zugehörigen Aggregat verbunden ist.

Die erfindungsgemäße Anlage hat insofern Ähnlichkeit mit der Tropfkörperanlage als auch bei ihr Bakterien stationär vermehrt und akkumuliert werden. Während aber bei den Tropfkörperanlagen die Bakterien hauptsächlich in der Weise wirken, daß das Abwasser an den an der Unterlage festgehaltenen Bakterien vorbeiströmt, werden bei der erfindungsgemäßen Anlage die stationär auf einer Unterlage gezüchteten Bakterien kontrolliert an das Abwasser abgegeben und haben auf diese Weise - insofern ähnlich dem Belebungsbecken - einen wesentlich intensiveren Kontakt mit dem Abwasser als die Bakterien in der Tropfkörperanlage. Mit der dadurch bereits zu Beginn der Behandlung erzielbaren hohen Bakterienkonzentration lassen sich mit der erfindungsgemäßen Anlage auch mit organischem und anorganischem Material relativ hochbelastete Abwässer rasch aufarbeiten.

Anlagen, bei denen getrennt von der Behandlungsstufe, in der die mikrobiologische Reinigung der Abwässer stattfindet, zusätzlich Bakterien akkumuliert werden, die dann dem Abwasser zugefügt werden, sind aus der DE-A-38 26 519 und der EP-A-0 503 546 bekannt. Jedoch sollen dabei nur eine oder wenige spezialisierte Arten der zum Abbau der Verunreinigungen benötigten Mikroorganismen gezüchtet werden, um den Abbau bestimmter Verunreinigungen im Abwasser zu beschleunigen. Für die Züchtung dieser spezialisierten Mikroorganismen ist es zweckmäßig, ganz bestimmte Bedingungen (Zusammensetzung der Nährlösung und bevorzugt pH-Wert und Temperatur) einzuhalten, die sich von denen in der mikrobiologischen Behandlungsstufe unterscheiden.

Zum Akkumulieren einer hohen Bakterienkonzentration, die aber nicht zu fest an den Mitteln haftet, ist es vorteilhaft, wenn die Mittel aus organischen oder anorganischen , bevorzugt in der Natur vorkommenden Stoffen bestehen, wobei unregelmäßig geformte Weichholzstangen und in - bevorzugt - keramische Hohlkörper eingefüllte Baumwolle oder Bimssteine besonders günstig sind.

Die mikrobiologische Behandlungsstufe läßt sich - entsprechend angepaßt - für eine aerobe und/oder eine anaerobe Behandlung des Abwassers verwenden. Für eine Kombination aus aerober und anaerober Behandlung ist es günstig, wenn zwei je mit einem der genannten Aggregate verbundene Reaktoren vorgesehen sind, von denen der eine belüftet ist, wobei der Abfluß des einen Reaktors mit dem Zufluß des anderen und umgekehrt verbunden ist und außerdem ein Zufluß zu der so ausgebildeten mikro-biologischen Behandlungsstufe und ein Abfluß aus ihr vorhanden ist.

Um den relativ langsam verlaufenden anaeroben Abbau im Verhältnis zum aeroben Abbau zeitlich zu verlängern, ist es vorteilhaft, wenn ein dritter in die Verbindungsleitung zwischen dem unbelüfteten und dem belüfteten Reaktors einkoppelbarer Reaktor vorgesehen ist, dem keines der genannten Aggregate zugeordnet ist und in den der genannte Abfluß integriert ist. Zum Entfernen von Schlamm und/oder Abwasser läßt sich der dritte Reaktor aus dem Kreislauf auskoppeln, um eine Beruhigung des Reaktorinhalts und damit ein Absetzen des Schlamms zu ermöglichen.

Es ist günstig, wenn der mikrobiologischen Behandlungsstufe eine mikrobiologische Vorbehandlungsstufe vorgeschaltet ist, die insbesondere dazu dient, anaerobe Bakterien zu züchten.

Bevorzugt ist der mikrobiologischen Behandlungsstufe auch noch eine mechanische und eine chemische Behandlungsstufe und eine Entkeimungsanlage vor- und eine chemische Nachbehandlungsstufe nachgeschaltet. Die einzelnen Stufen sind jede für sich bekannt. Ihr Einsatz, wie auch derjenige der mokrobiologischen Vorbehandlung im Rahmen der Erfindung insbesondere auch die Reihenfolge, in der diese Stufen und die mikrobiologische Behandlungsstufe miteinander kombiniert sind, unterstützt den raschen und vollständigen bakteriellen Abbau der Materie in der mikrobiologischen Behandlungsstufe, bzw. die Erreichung des vom WHG geforderten Reinheitsgrads für Abwässer, die in kommunale Abwassernetze eingeleitet werden dürfen, und auch die Bereitstellung eines wertvollen Wirtschaftsdüngers, der weigehend frei von schädlichen Beimengungen ist.

Bei dem erfindungsgemäßen Verfahren muß die nach Zusammensetzung und Menge optimale Bakterienpopulation in dem aufzuarbeitenden Abwasser nicht erst - wie beim Belebtverfahren - aufgebaut werden, vielmehr steht sie von Anfang an zur Verfügung und zwar - anders als bei der Verwendung von Tropfkörpern - homogen im Abwasser verteilt.

Das Abwasser wird bei dem erfindungsgemäßen Verfahren bevorzugt sowohl aeroben als auch anaeroben mikrobiologischen Bedingungen ausgesetzt. Dabei finden die oben angegebenen Reaktionen statt. Zwar lassen sich anaerobe Bakterien nicht so rasch vermehren wie die aeroben, aber doch so schnell, daß das Reinigungsverfahren durch die Einbeziehung der anaeroben Reinigung deutlich beschleunigt werden kann. Dies ist besonders dann der Fall, wenn man das Abwasser zwischen einem belüfteten und einem unbelüfteten Reaktor zirkulieren läßt. Dadurch, daß bei einer derartigen Kopplung der beiden Reaktoren die abzubauende Materie abwechselnd aeroben und anaeroben Reaktionsbedingungen ausgesetzt ist und die im einen Reaktor entstandenen Produkte im anderen gleich weiter reagieren, wird ein besonders rascher und vollständiger Abbau der Materie erreicht. Dabei läßt sich der Reinigungseffekt nicht unerheblich noch dadurch steigern, daß die Zirkulation getaktet wird, damit das Abwasser über längere zusammenhängende Zeiträume in den einzelnen Reaktoren verbleibt.

Da die Reaktivität und das Wachstum der Bakterien temperatur- und p_{H}-wertabhängig ist, werden bei der mikrobiologischen Aufarbeitung bevorzugt festgelegte Temperatur- und p_{H}-Werte eingehalten.

Um die Bakterien auf den Mitteln aufzuwachsen und zu akkumulieren ist es vorteilhaft, wenn die dabei verwendete Abwassercharge im wesentlichen denselben mikrobiologischen Behandlungsbedingungen unterworfen wird wie das genannte aufzuarbeitende Abwasser.

Beim erstmaligen Aufwachsen der Bakterien auf den Mitteln, d.h. wenn die Anlage erstmalig in Betrieb genommen wird oder wenn - beispielsweise nach einem Absterben der Bakterien ganz neu aufgewachsen werden muß, kann man in vorteihafter Weise so vorgehen, daß eine wässrige, organische und ggf. anorganische, bevorzugt stickstoffarme Materie enthaltende Nährflüssigkeit zusammen mit einer Mischung, die Bakterien enthält, welche die organische und teilweise die anorganische Materie in dem aufzuarbeitenden Abwasser abzubauen vermögen, in die mikrobiologische Behandlungsstufe gebracht wird, daß diese Flüssigkeit im wesentlichen denselben - jedoch den unterschiedlichen Ausgangsbedingungen angepaßten - mikrobiologischen Behandlungbedingungen, wie das genannte aufzuarbeitende Abwasser unterworfen wird, und daß, nachdem der Abbau der Materie begonnen hat, der Nährflüssigkeit eine Probe des genannten, abzubauenden Abwassers zugemischt wird.

Bei der die Bakterien enthaltenden Mischung, die zur Bekeimung dient, kann es sich um einen Belebtschlamm, der bei der Aufarbeitung einer früheren Charge des aufzuarbeitenden Abwassers gewonnen wurde und - z.B. als Kältekonserve - zur Verfügung steht, oder um einen Belebtschlamm aus einer Kläranlage, in die Abwässer aus verschiedenartigen Abwasserquellen eingeleitet werden oder auch um eine Probe eines kommunalen Abwassers handelt, die im wesentlichen frei von Krankheitserregern ist, aber bevorzugt dieselben organischen und anorganischen Bestandteile enthält wie das zu behandelnde Abwasser. Die Selektion und die Vermehrung der brauchbaren Bakterien verläuft am schnellsten, wenn als Bakterienmischung ein Belebtschlamm aus einer früheren Charge desselben Abwassers verwendet wird, weil die darin befindlichen Bakterien schon recht gut an das Abwasser angepaßt ist. Länger dauert es, wenn als Bakterienmischung ein Belebtschlamm aus einer kommunalen Kläranlage oder gar eine beliebige Abwasserprobe eingesetzt, weil in diesen Fällen zunächst die Anpassung durchgeführt werden muß, sei es, indem die Bakterien ihr Enzymsystem auf die speziellen Verbindungen im Abwasser einstellen, sei es, indem eine natürliche Selektion stattfindet, wobei Bakterienarten, welche die abzubauenden Verbindungen im Abwasser am besten verarbeiten können, sich schneller vermehren. Jedoch sei klargestellt, das die Erzeugung der optimalen Bakterienmischung nur eine Frage der Zeit ist.

Die Bakterien finden auf den Mitteln in den Aggregaten günstige Bedingungen, um sich anzusiedeln. Damit sie sich vermehren, muß allerdings auch noch das ihnen gemäße Sauerstoffangebot vorhanden bzw. Sauerstoff ausgeschlossen sein. Die Bakterien finden das beim Behandeln des Abwassers vorhandene Sauerstoffangebot vor, was, wenn sowohl unter aeroben auch unter anaeroben Bedingungen abgebaut wird, je nachdem in welchem Teil der Anlage sie sich gerade befinden, ein hohes Sauerstoffangebot oder Sauerstoffausschluß bedeutet. D. h. mit anderen Worten: In dem zum belüfteten Reaktor gehörenden Aggregat vermehren sich die Bakterien, die zum Wachsen Sauerstoff benötigen, und in dem zum nicht belüfteten Reaktor gehörenden Aggregat vermehren sich die Bakterien, die unter Luftabschluß wachsen oder die (fakultativen) Bakterien, die ihren Sauerstoffbedarf ggf. auch bei vorhandenen sauerstoffhaltigen Verbindungen decken können. Eine rasche Aufarbeitung des vorliegenden Abwassers wird dadurch unterstützt, daß (s.o.) insbesondere solche Bakterien auf den Mitteln sich vermehren, welche bevorzugt die in dem vorliegenden Abwasser vorhandenen Verbindungen abbauen bzw. sich von diesem ernähren. Die Vermehrung solcher Bakterien wird gefördert, wenn die Nährflüssigkeit teilweise aus dem aufzuarbeitenden Abwasser besteht, was dazu führt, daß Bakterien, die auf ein anderes Material spezialisiert sind, schlechter ernährt werden, und zur weiteren Beschleunigung der Selektion die mengenmäßige Zusammensetzung der Nährflüssigkeit im Lauf des Bakterienwachstums gezielt in Richtung eines zunehmend größeren Anteils des zu reinigenden Abwassers geändert wird. Um bei der Selektion bevorzugt möglichst lebensfähige und reaktive Bakterienstämme zu vermehren und weniger lebensfähige und vermehrungsfähige Bakterien zurückzudrängen ist es vorteilhaft - in Abweichung von den Bedingungen der mikrobiologischen Behandlung - während des Bakterienwachstums zu festgelegten Zeiten und für festgelegte Zeitdauern der p_{H}-Wert über den festgelegten Wert hinaus zu erhöhen. Man gelangt dabei in p_{H}-Bereiche, in denen Bakterien eigentlich nicht mehr leben können, und es ist offenbar so, daß nur besonders lebensfähige Bakterien überleben, wenn sie solchen Bedingungen ausgesetzt werden. Anschließend werden die Mittel nur noch Abwasserchargen ausgesetzt, die im wesentlichen gleich wie das aufzuarbeitende Abwasser zusammengesetzt sind.

Um ein möglichst gut geklärtes, wenig Verunreinigungen enthaltendes Abwasser bei dem erfindungsgemäßen Verfahren zu erhalten, ist es günstig, wenn nach Abschluß der mikrobiologischen Aufarbeitung, nur ein Teil des aufgearbeiteten Abwassers und des entstandenen Schlamms aus der mikrobiologischen Reinigungsstufe entfernt wird, anschließend das freigewordene Volumen mit noch nicht aufgearbeitetem Abwasser aufgefüllt wird, und dann der mikrobiologische Behandlungsschritt erneut durchgeführt wird. Dabei addieren sich dann die von genannten Mitteln in den genannten Aggregaten abgelösten Bakterien zu den in dem verbliebenen Abwasser vorhandenen Bakterien. Bevorzugt liegt der Anteil des entfernten und ersetzten Abwassers im Bereich zwischen etwa 2,5 und etwa 30 Vol.-% und noch bevorzugter zwischen etwa 5 und etwa 20 Vol.%. Die Anwesenheit des Schlamms ist deshalb vorteilhaft, weil er als Träger für die Bakterien im aufzuarbeitenden Abwasser dient.

Zur weiteren Optimierung des erfindungsgemäßen Verfahrens ist es vorteilhaft, wenn vor der mikrobiologischen Behandlung aus dem Abwasser zunächst die Feststoffe und daraufhin chemisch-physikalisch und/oder chemisch fällbare Verbindungen, wie Phosphate und Ammoniumverbindungen, bis auf festgelegte Restgehalte entfernt werden. Der Phosphatrestgehalt ist insbesondere erwünscht bei der mikrobiologischen Reinigung. Bei der physikalisch-chemischen Fällung werden bevorzugt Flockungsmittel eingesetzt.

Zur Abtötung von Krankheitserregern, wie Salmonellen, ist es günstig, vor der mikrobiologischen Reinigung das Abwasser zu entkeimen, wobei erhitzt oder mit UV bestrahlt wird, und ggf. zusätzlich, z.B. auf einen p_{H}-Wert von etwa 4, angesäuert wird. Das Ansäuern hat für den Fall, daß Gülle behandelt wird, den zusätzlichen günstigen Effekt, daß in dieser enthaltene Karbonate und Bikarbonate, zerstört werden, welche die Flockung stören oder sogar verhindern können, und daß für den mikrobiologischen Abbau unwirksame Bakterien entfernt werden.

Da die anaeroben Bakterien sich wesentlich langsamer wie die aeroben vermehren, ist es vorteilhaft, wenn der mikrobiologischen Reinigung eine mikrobiologische Vorbehandlung vorgeschaltet ist, die im wesentlichen unter Luftausschluß abläuft. Zu dem der Vorbehandlung unterworfenen Abwasser wird etwa 5 bis 20 Vol.-% seiner Menge von aus der mikrobiologischen Stufe stammendem Abwasser zugefügt. Die mikrobiologische Vorbehandlung, welche im schwach sauren Bereich durchgeführt wird, hat den weiteren Vorteil, daß bei ihr große organische Moleküle zu kleineren hydrolysiert (z.B. Proteine zu Aminosäuren) werden, die für die Bakterien leichter verdaulich sind als die großen. Da die mikrobiologische Vorbehandlung einer Charge gleichzeitig mit der mikrobiologischen Behandlung der vorangehenden Charge durchgeführt wird, verlängert sie nicht die Dauer der Abwasserbehandlung.

Die zusätzlichen Verfahrensschritte der mechanischen und chemischen Vorbehandlung, der Entkeimung, der mikrobiologischen Vorbehandlung und der chemischen Nachbehandlung entlasten und/oder unterstützen die mikrobiologische Behandlung bzw. - wie die chemische Nachbehandlung - verbessern das Reinigungsergebnis.

Mit der vorteilhaften Ausgestaltung des erfindungsgemäßen Verfahrens, bei der in der mikrobiologischen Behandlungstufe das Abwasser sowohl unter aeroben als auch unter anaeroben Bedingungen behandelt wird und bei dem auch die zusätzlichen Verfahrensschritte der mechanichen und chemischen Vorbehandlung, der Entkeimung, der mikrobiologischen Vorbehandlung und der chemischen Nachbehandlung durchlaufen werden, lassen sich deshalb in überraschend kurzer Zeit auch hochbelastete Abwässer, wie Sickerwässer, insbesondere Fäkalien enthaltende Sickerwässer, Güllen und Jauchen soweit reinigen, daß das nach ihrer Aufarbeitung verbleibende Wasser den gesetzlichen Vorschriften (WHG) entspricht und in das kommunale Abwassernetz eingeleitet werden kann, während die bei der Aufarbeitung anfallenden Feststoffe die Basis für einen Wirtschafsdünger bilden können, der weitgehend frei von Krankheitskeimen aber reich an Bodenmikrobiologie ist. Im übrigen haben diese Ausführungsform des erfindungsgemäßen Verfahrens und die mit ihm erzeugten Produkte alle Vorteile, die am Schluß der Beschreibung aufgeführt sind.

Weitere vorteilhafte Ausgestaltungen der erfindungsgemäßen Anlage und des erfindungsgemäßen Verfahrens sind in den Unteransprüchen offenbart.

Die Erfindung wird im folgenden anhand von durch Zeichnungen erläuterten Ausführungsbeispielen besprochen. Es zeigen
Fig. 1 in schematischer Blockdarstellung eine bevorzugte Ausführungsform der erfindungsgemäßen Anlage und den Fluß des Abwassers durch die Anlage bei der Durchführung einer bevorzugten Ausführungsform des erfindungsgemäßen Verfahrens,
Fig. 2 in schematischer Darstellung eine bevorzugte Ausführungsform einer ggf. in die erfindungsgemäße Anlage integrierte Entkeimungsanlage und

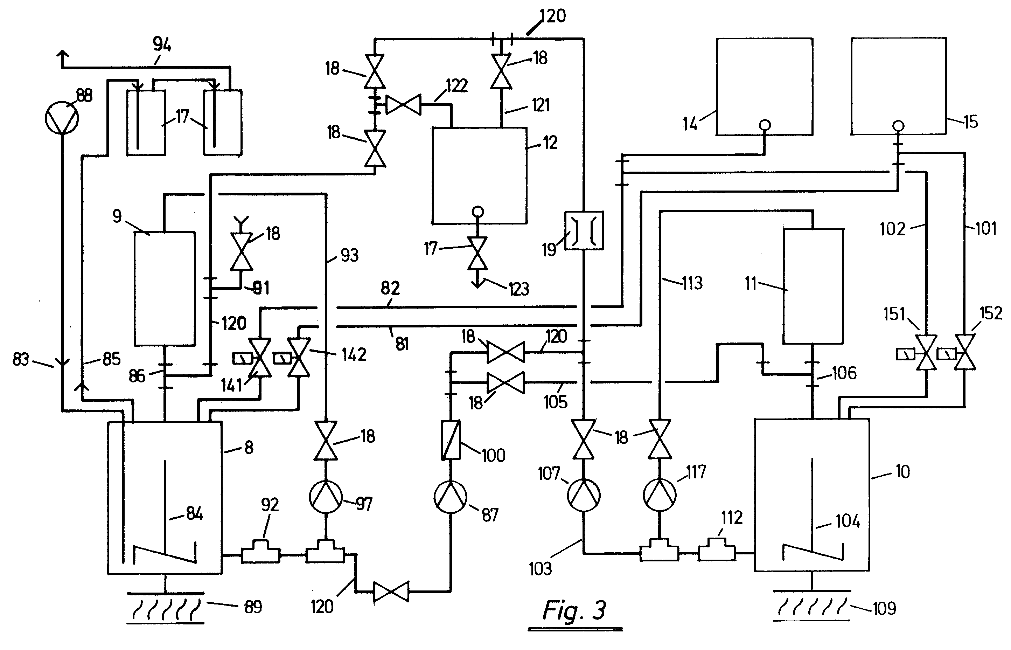

Fig. 3 in schematischer Darstellung eine bevorzugte Ausführungsform der in die erfindungsgemäße Anlage integrierte mikrobiologische Behandlungsstufe.

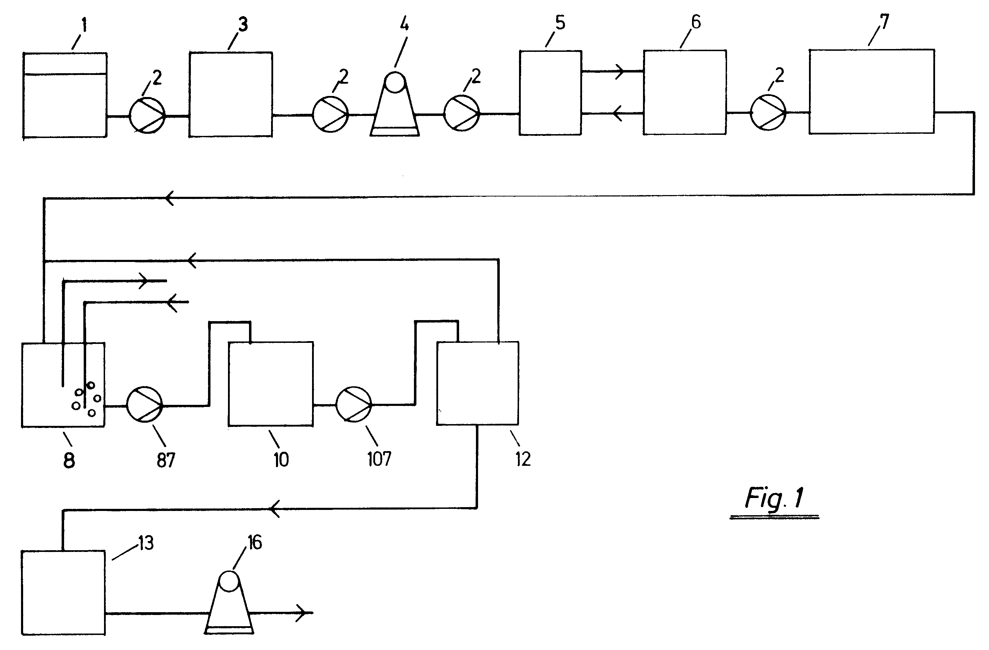

Wie die Fig. 1 zeigt, gelangt bei der Durchführung einer bevorzugten Ausführungsform der Erfindung das Abwasser zunächst in die mechanische Behandlungsstufe 1, in der Feststoffe und Schwebeteilchen in konventioneller Weise, beispielsweise mittels Dekantierens oder Siebens, abgetrennt werden.

Das mechanisch gereinigte Abwasser wird dann mittels einer Pumpe 2 in die chemische Behandlungsstufe 3 gepumpt, in der Ammoniak und Phosphat durch Zugabe einer auf die vorhandenen Mengen der beiden Verbindungen abgestimmten Menge eines Magnesiumsalzes als Magnesiumammoniumphosphat bis auf festgelegte Reste ausgefällt werden. Diese Ausfällung ist insbesondere bei der Aufarbeitung von Gülle von Vorteil, weil durch sie die mikrobiologische Reinigung entlastet wird. Die Trennung des Abwassers von dem ausgefällten Magnesiumammoniumphosphat erfolgt in einem Dekanter 4, in den das Abwasser nach dem Ausfällen mittels einer weiteren Pumpe 2 gepumpt wird.

Das chemisch vorbehandelte Abwasser wird aus dem Dekanter 4 in die Entkeimungsanlage 5 mit zugehörigem Vorratsbehälter mittels einer weiteren Pumpe 2 gepumpt. In der Entkeimungsanlage 5 werden die Keime durch die kombinierte Wirkung einer UV-Bestrahlung und einer Absenkung des p_{H}-Werts des Abwassers auf etwa 4 abgetötet.

Es ist auch möglich, daß das Abwasser zuerst entkeimt und dann erst chemisch vorbehandelt wird. Diese Reihenfolge hat aber den Nachteil, daß der bei der chemischen Vorbehandlung anfallende Schlamm ohne mikrobiologisches Leben ist.

Aus dem Vorratsbehälter wird das entkeimte Abwasser mittels einer weiteren Pumpe 2 - gegebenenfalls auf dem Umweg über eine mikrobiologische Vorbehandlungsstufe 7 - in die mikrobiologische Behandlungsstufe gepumpt. Diese Vorichtung ist der Kern der Anlage für die Aufarbeitung des Abwassers. In ihr werden die organischen und ein Teil der anorganischen Bestandteile im Abwasser mit Hilfe von aeroben, anaeroben und fakultativ anaeroben Bakterien in eine Form überführt, in der sie von der wässrigen Phase abgetrennt werden können.

Die mikrobiologische Vorbehandlung 7 hat den Zweck, das Mengenverhältnis der sich relativ langsam vermehrenden anaeroben Bakterien zu den sich relativ schnell vermehrenden aeroben Bakterien unter Bedingungen, die die Vermehrung der ersteren begünstigen, zu vergrößern. Die mikrobiologische Vorbehandlung wird bei einem p_{H}-Wert < 6 durchgeführt. Dadurch wird die Hydrolyse großer organischer Moleküle, wie Proteine, und der Abbau von Nitrat zu Stickstoff begünstigt.

Die mikrobiologische Behandlungsstufe besteht im wesentlichen aus drei mit Zusatzvorrichtungen ausgerüsteten Reaktoren, nämlich dem aeroben Reaktor 8 (im folgenden als Aereak 8 bezeichnet), dem anaeroben Reaktor 10 (Anreak 10) und einem weiteren Reaktor 12, in dem zusätzlich unter anaeroben Bedingungen abgebaut und anfallender Schlamm gesammelt wird (Schlanreak 12). Als Zusatzvorrichtungen weisen der Aereak 8 und der Anreak 10 insbesondere Bakterien liefernde Aggregate (im folgenden BL-Aggregate) auf, die als Träger dienende Mittel enthalten, auf denen sich aerobe bzw. anaerobe Bakterien akkumulieren können.

Von dem Vorratsgefäß 6 bzw. von der mikrobiologischen Vorbehandlung 7 gelangt das Abwasser - bevorzugt - zunächst in den Aereak 8. Im Aereak 8 wird das Abwasser ständig mit Luft durchmischt. Im Anreak 10, in den das Abwasser vom Aereak 8 gelangt, wird es unter Luftabschluß behandelt, ebenso in dem dem Anreak nachgeschalteten Schlanreak 12. In der mikrobiologischen Behandlungsstufe wird das Abwasser in der genannten Reihenfolge solange von einem Reaktor zum anderen umgepumpt, bis die organischen Bestandteile in der gerade in der mikrobiologischen Behandlungstufe befindliche Abwassercharge vollständig abgebaut und/oder in eine Form überführt sind, in der sie als Gas oder als Feststoff von der Flüssigkeit abgetrennt werden können. Um diesen Abbau zu beschleunigen, werden zu Beginn der Behandlung die auf den Mitteln akkumulierten Bakterien in das Abwasser eingebracht. Der überschüssige, d.h. der nicht mehr als Bakterienträger benötigte, bei der mikrobiologischen Behandlung entstehende Schlamm wird im Schlanreak 12 gesammelt. Ein Teil des mikrobiologisch behandelten Abwassers (etwa 1/10 des Inhalts der mikrobiologischen Behandlungsanlage) wird dann mit dem gesammelten Schlamm in eine Nachbehandlungsstufe 13 transportiert. Die eventuell entstehenden gasförmigen Abbauprodukte werden zusammen mit der Abluft über eine vom Aereak 8 ausgehende Rohrleitung wegggeführt. Das Volumen, das der wegtransportierte Teil freimacht, wird mit Abwasser aufgefüllt, das aus der Entkeimungsanlage oder ggf. der mikrobiologischen Vorbehandlungsstufe zufließt, worauf der nächste Zyklus der mikrobiologischen Behandlung beginnt.

In der Nachbehandlungsstufe 13 wird zu dem mikrobiologisch behandelten Abwasser Kalkmilch gegeben, um Reste von Stickstoffverbindungen zu entfernen. Sofern es erforderlich ist, auch restliches Phosphat zu entfernen, wird anstatt der Kalkmilch oder zusätzlich zu ihr Dolomit zugegeben, um das Phosphat als Magnesiumammoniumphosphat auszufällen. Die Zugabe von Flockungsmitteln unterstützt das Ausfällen. Die Fällung wird zusammen mit den im Abwasser noch vorhandenen Feststoffen abgetrennt und mit den anderen abgetrennten Feststoffen zu Wirtschaftsdünger weiterverarbeitet, während die Flüssigkeit so rein ist, daß sie in öffentliche Gewässer eingeleitet werden darf.

Im folgenden werden einzelne Abschnitte einer bevorzugten Ausführungsform der erfindungsgemäßen Anlage und ihre Funktionen bzw. die in ihr durchgeführten Verfahrensschritte im Detail beschrieben. Als Abwasser, das gereingt werden soll, wird dabei Gülle eingesetzt. Es sei aber klargestellt, daß zwar die Vorteile der erfindungsgemäßen Anlage und des erfindungsgemäßen Verfahrens bei der Anwendung auf Güllen besonders deutlich demonstriert werden können, weil bei Güllen einerseits alle Probleme auch auftreten, die bei der Reinigung der üblichen kommunalen Abwässer vorkommen, und andererseits wegen der hohen Belastung mit organischem Materiel die Lösung dieser Probleme besonders schwierig ist, daß aber die Anwendung der Erfindung nicht auf Güllen beschränkt ist.

### Chemische Behandlung

Apparativ ist die chemische Behandlungsstufe 3 recht einfach. Sie besteht im wesentlichen aus einem mit einem Rührwerk versehenen Kessel, der für die Flüssigkeit einen Einlaß and einen Ausfluß aufweist.

Bei der chemischen Vorbehandlung wird die mechanisch gereinigte Gülle zunächst durch Zugabe von Natronlauge auf einen p_{H}-Wert im Bereich zwischen 7,5 und 9 gebracht.

Anschliessend wird entsprechend einer zuvor durchgeführten analytischen Bestimmung des Ammonium- und Phosphatgehalts der Gülle eine Lösung eines Magnesiumsalzes unter Rühren zu der Gülle gegeben. Dabei fällt Magnesiumammoniumphosphat aus. Flockungsmittel können die Ausfällung unterstützen. Die zugegebene Magnesiumsalzmenge ist so berechnet, daß noch etwa 10 bis etwa 30 mg Phosphat/l Gülle verbleiben. Gegebenenfalls muß eine festgelegte Menge Phosphat zugegeben werden, um die angegebenen Restmengen zu gewährleisten. 10 mg Phosphat pro Liter Gülle sind als untere Grenze erforderlich, um in einem späteren Verfahrensschritt einen schnellen mikrobiologischen Abbau des Ammoniums zu gewährleisten. Gülle enthält Ammoniak in der Form von Harnstoff und Phosphat, wobei der Harnstoff in größerer Konzentration vorhanden ist als das Phosphat. Schweinegülle enthält diese Stoffe in größeren Mengen als Rindergülle. Ein geringer Gehalt an Ammonium in der chemisch vorbehandelten Gülle ist unkritisch, da es später mikrobiologisch abgebaut wird.

### Entkeimung

Die Entkeimung hat den Zweck, in der Gülle enthaltene Krankheitserreger abzutöten. Bei den Krankheitserregern, die am häufigsten in Güllen, wie auch in anderen Abwässern, nachweisbar sind, handelt es sich in erster Linie um die große Gruppe der Salmonellen. In seltenen Fällen können neben den Salmonellen auch andere Krankheitserreger vorhanden sein.

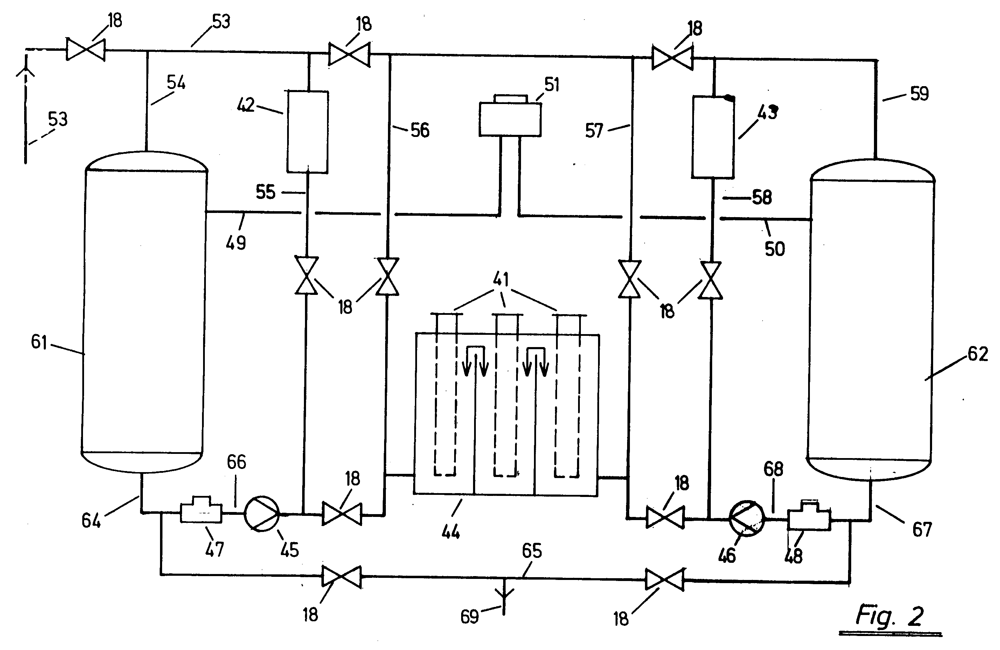

Mit der in der Fig. 2 gezeigten Entkeimungsanlage lassen sich zwei Güllechargen nebeneinander entkeimen. Im Zentrum der Anlage befindet sich eine große UV-Bestrahlungsanlage 41, um die herum zwei identiche Anlagenbereiche angeordnet sind, die als wesentliche Teile einen Vorratsbehälter 61 bzw. 62 und eine kleine UV-Bestrahlungsanlage 42 bzw. 43 aufweisen. Beschickt werden die Vorratsbehälter über Stichleitungen 54 bzw. 59, welche von einer oberhalb der Vorratsbehälter angeordneten Rohrleitung 53 abzweigen. Die Rohrleitung 53 verbindet die Entkeimungsanlage mit der chemischen Behandlungstufe. Entsorgt werden die Vorratsbehälter über Stichleitungen 64 bzw. 67, welche in eine unterhalb der Vorratsbehälter angeordnete Rohrleitung 65 münden. Über eine Rohrleitung 69 ist die Rohrleitung 65 mit der mikrobiologischen Behandlungsstufe oder - gegebenenfalls - mit der mikrobiologischen Vorbehandlungsstufe verbunden. Von der Rohrleitung 65 zweigt in der Nähe der Einmündung der Stichleitung 64 eine Rohrleitung 66 ab, welche in eine Wanne 44 mündet, in welche die UV-Bestrahlungsanlage 41 eintaucht. Entsprechend zweigt von der Rohrleitung 65 in der Nähe der Einmündung der Rohrleitung 67 eine Rohrleitung 68 ab, die ebenfalls in die Wanne 44 mündet.

Zwischen den Rohrleitungen 53 und 65 und diese verbindend sind in jedem der Anlagebereiche zwei Rohrleitungen 55 und 56 bzw. 57 und 58 vorgesehen, wobei jeweils die einem der Vorratsbehälter 61 bzw. 62 benachbarte Rohrleitung (55 bzw. 58) durch eine der kleinen UV-Bestrahlungsanlagen 42 bzw. 43 verläuft. Außer durch die Stichleitungen 54 und 64 bzw. 59 und 67 sind die Vorratsbehälter 61 und 62 noch durch Rohrleitungen 49 bzw. 50 zugänglich, die mit einem Säurebebehälter 51 verbunden sind. In den Rohrleitungen 66 und 68 ist zwischen den Vorratsbehältern 61 bzw. 62 und den Abzweigungen der Rohrleitungen 55 und 56 bzw. 58 und 57 je eine Umlaufpumpe 45 bzw. 46 eingebaut. Je ein Absperrventil 18 (in die Rohrleitungen 49 und 50 nicht eingezeichnet) sind in den Rohrleitungen 55, 56, 57, 58, 49, 50 und in den Rohrleitungen 66 und 68 zwischen den Einmündungen der Rohrleitungen 55 und 56 bzw. 57 und 58 vorgesehen. In der Rohrleitung 53 sind drei Absperrventile 18 vorgesehen und zwar zwischen der Zuführung und der Abzweigung der Stichleitung 54 und zwischen den Einmündungen der Rohrleitungen 55 und 56 und zwischen den Einmündungen der Rohrleitungen 57 und 58. In der Rohrleitung 65 sind zwei Absperrventile 18 vorgesehen und zwar auf beiden Seiten der Abzweigung 69 zu den mikrobiologischen Behandlungstufen. Zusätzlich sind in den Rohrleitungen 66 und 68 zwischen den Abzweigungen von der Rohrleitung 65 und der Umlaufpumpe 45 bzw. 46 je eine pH-Wertmeßstelle 47 bzw 48 eingebaut.

Zur Entkeimung wird die von Feststoffen und Schwebeteilchen befreite Gülle (s. Fig. 2) über die Rohrleitungen 53 und 54 bzw. 59 - beispielsweise - in den leeren Vorratsbehälter 61 eingefüllt, während sich dann im Vorratsbehälter 62 in diesem Moment Gülle befindet, die bereits im wesentluchen entkeimt ist. Nunmehr wird, wobei die Rohrleitung 65 und das Ventil vor der Abzweigung der Rohrleitung 54 gesperrt sind (Ausdrücke wie "vor", "nach" und "hinter" sind im folgenden als auf die Transportrichtung der Gülle bezogen zu verstehen), die Gülle im Vorratsbehälter 61 mittels der Umlaufpumpe 45 umgepumpt, wobei die Absperrventile 18 in den Rohrleitungen 57, 66 und in der Rohrleitung 53 das zwischen den Rohrleitungen 55 und 56 angeordnete geöffnet sind. Die umgepumpte Gülle passiert dabei die Wanne 44, wo sie mittels der Bestrahlungsvorrichtung 41 bestrahlt wird. Nachdem zunächst die Gülle beim Bestrahlen ihren ursprünglichen p_{H}-Wert aufweist, wird in einem zweiten Schritt Säure aus dem Säurebehälter 51 über die Rohrleitung 49 in den Vorratsbehälter 61 gegeben, bis an der p_{H}-Meßstelle 47 ein p_{H}-Wert zwischen etwa 3 und etwa 5, bevorzugt von etwa 4, gemessen wird, worauf manuell oder automatich das Absperrventil in der Rohrleitung 49 geschlossen wird. Durch die p_{H}-Wertänderung wird nicht nur erreicht, daß der Lebensraum für Keime eingeengt wird, sondern es werden auch die in der Gülle enthaltenen Carbonate und Bicarbonate zerstört. Werden sie nicht zerstört, wirken sie sich im weiteren Verlauf auf die Behandlung störend aus, indem sie die Flockung stören oder sogar verhindern. Beim Ansäuern emitiert eine relativ große Gasmenge, die eine beachtliche Menge an güllespezifischen Geruchsstoffen enthält. Das entweichende Gas (hauptsächlich CO₂ und NH₄⁺) wird in den Aereak (mikrobiologische Behandlungsstufe) eingeleitet, wo es z.T. von der dort vorhandenen Gülle absorbiert, und anschließend mikrobiologisch aufgearbeitet wird.

Die Bestrahlung wird während der p_{H}-Wertänderung und danach fortgesetzt. Parallel dazu wird auch die Gülle im Vorratsbehälter 62 mittels der Pumpe 46 umgepumpt, wobei das Absperrventil 18 in der Rohrleitung 58 geöffnet ist und die die Rohrleitung 58 passierende Gülle mittels der Bestrahlungsvorrichtung 43 bestrahit wird. Die relativ geringe Strahlungsenergie der Bestrahlungsvorrichtung 43 reicht nicht nur aus, um noch vorhandene Keime an der Vermehrung zu hindern, sondern auch um diese vollends abzutöten. Nach etwa einer Stunde Bestrahlung ist die Entkeimung der Gülle aus dem Vorratsbehälter 61 im wesentlichen und die der Gülle aus dem Vorratsbehälter 62 vollständig abgeschlossen. Die Gülle aus dem letzteren wird dann zur nächsten Abbaustufe weitergeleitet und der dann leere Vorratsbehälter 62 wird mit der nächsten Charge nicht entkeimter Gülle gefüllt. Durch entsprechende Umschaltung der Absperrventile werden anschließend die nichtentkeimte Gülle im Vorratsbehälter 62 und die im wesentlichen entkeimte Gülle im Vorratsbehälter 61 denselben Behandlungen unterworfen wie bei der vorangegangenen, ersten Entkeimung die Gülle im Vorratsbehälter 61 bzw. die im Vorratsbehälter 62. Bei der dritten Entkeimung sind die Verhältnisse wieder wie bei der ersten usw.

Der richtige Zeitpunkt für den Abbruch der Entkeimung beruht auf einem Erfahrungswert, der durch vorab durchgeführte Versuche bestimmt wurde, wobei als Kriterium der Keimfreiheit (etwa 20 000 bis etwa 50 000 Keime/ml Gülle sind noch vorhanden) galt, daß in einer auf auf einen Agar-Agar-Nährboden gebrachten Probe kein Keimwachstum beobachtet wurde.

Nach der Entkeimung wird die Gülle dem mikrobiologischen Abbauprozeß zugeführt.

### Mikrobiologische Vorbehandlung

Bevorzugt wird die Gülle vor der eigentlichen mikrobiologischen Behandlung einer mikrobiologischen Vorbehandlung unterworfen. Diese ist deshalb vorteilhaft, weil die anaeroben Bakterien sich etwa zehnmal langsamer vermehren als die aeroben. Da die eigentliche mikrobiologische Behandlung der bei weitem zeitaufwendigste Verfahrensschritt des erfindungsgemäßen Verfahrens ist, läßt sich - ohne daß das erfindungdgemäße Verfahren dadurch verlängert wird - parallel dazu die nächste für die mikrobiologische Behandlung anstehende Güllecharge unter Bedingungen halten, unter denen sich die anaeroben Bakterien vorab vermehren. Darüber hinaus findet bei der mikrobiologischen Vorbehandlung - unterstützt durch einen pH-Wert von < 6 - eine Hydrolyse von großen organischen Molekülen, wie Proteinen, statt.

Die mikrobiologische Vorbehandlungsstufe ist recht einfach aufgebaut. Der für die Behandlung verwendete Behälter weist einen Einlaß und einen Abfluß für die Gülle, einen weiteren Einlaß, der einerseits mit einem Säure- und einem Laugenbehälter und andererseits mit der mikrobiologischen Behandlungsstufe verbunden ist und darüber hinaus eine Rohrschleife auf, die aus der Behälterwand heraus- und auch wieder in sie hineingeführt ist und in die eine Umwälzpumpe und eine p_{H}-Wertmeßstelle eingebaut ist. Außerdem läßt sich der Behälter belüften.

Die für die nächste mikrobiologische Behandlung vorgesehene Charge wird in den Behälter für die mikrobiologische Vorbehandlung gebracht und mit einer Menge Gülle aus der mikrobiologischen Behandlungsstufe die etwa 10% ihres Volumens ausmacht beimpft. Anschließend wird der p_{H}-Wert mit H₂SO₄ auf 5,5 bis 6 eingestellt. Bei der mikrobiologischen Vorbehandlung wird darauf geachtet, daß der p_{H}-Wert 6,0 nicht überschritten wird. Außerdem wird alle 45 Minuten 2 Minuten lang mit etwa 21 Luft/Min. belüftet, um Faulung im Ansatz zu unterbinden. Die abströmende Luft wird in die mikrobiologische Anlage geleitet, um güllespezifische Geruchsstoffe abzufangen und mikrobiologisch aufzuarbeiten. Während der mikrobiologischen Vorbehandlung, die bevorzugt so lange dauert wie die mikrobiologische Behandlung, wird die Gülle mit einer Umwälzpumpe durchmischt. Die Keimzahl in der mikrobiologisch vorbehandelten Gülle liegt zwischen etwa 500 000 und etwa 600 000/ml Gülle.

Die entkeimte, chemisch und mikrobiologisch vorbehandelte Gülle wird der mikrobiologischen Behandlung zugeführt.

### Die mikrobiologische Behandlung

Wie bereits beschrieben sind die wesentlichen Teile dieser Behandlungsstufe die drei Reaktoren Aereak 8, Anreak 10 und Schlanreak 12.

Der Aereak 8 ist ein beidseitig geschlossenes zylindrisches Gefäß mit senkrecht zur Unterlage verlaufender Zylinderachse (Im Prinzip könnte der Anreak auch eine offene Wanne sein. Wegen der Geruchsbelästigung ist eine solche Ausgestaltung allerdings nicht empfehlenswert). Vorrichtungen 84 und 89, um den Reaktorinhalt zu rühren bzw. zu heizen, sind vorgesehen. Durch den Zylinderdeckel hindurch sind zwei Rohrleitungen 81 bzw. 82 mit geringem Durchmesser zum Zuführen von Säure bzw. von Lauge, eine in der Nähe des Gefäßbodens endende Gaszuleitung 83, eine Gasableitung 85 und eine Rohrleitung 86 mit relativ großem Durchmesser etwa in der Deckelmitte zum Einleiten von Gülle geführt. Im unteren Teil der Zylinderwand ist eine Verbindungsleitung 120 mit relativ großem Durchmesser zum Entnehmen von Gülle angeschlossen. Die Rohrleitung 86 verbindet den Aereak 8 mit dem Ausgang des BL-Aggregats 9. Außerdem mündet in die Rohrleitung 86 die Verbindungsleitung 120. Die Verbindungsleitung 120, die - s.o. - vom Aereak 8 ausgeht, ist über Zu- und Ableitungen für Gülle mit dem Anreak 10 und dem Schlanreak 12 unter Zwischenschaltung von Absperrventilen 18 verbunden und außerdem ist sie über eine Rohrleitung 91 auch unter Zwischenschaltung eines Absperrventils 18 mit den flußaufwärts liegenden Anlagen verbunden.

In die Rohrleitung 120 ist direkt hinter dem Ausgang des Aereaks 8 eine Zelle 92 zur Messung des p_{H}-Werts eingebaut. Danach zweigt von der Verbindungsleitung 120 eine erste Zweigleitung 93 ab, die in das BL-Aggregats 9 mündet. In die Zweigleitung 93 und - nach deren Abzweigung - in die Verbindungsleitung 120 sind je eine Umlaufpumpe 97 bzw. 87 eingebaut, und hinter der letzteren zusätzlich noch ein Rückschlagventil 100.

In die Gaszuleitung 83, durch die der Aereak 8 belüftet wird, ist eine Gasförderpumpe 88 eingebaut. Das durch die Gasableitung 85 entweichende Gas passiert eine konventionelle - in der Fig.2 als zwei hintereinander geschaltete Waschflaschen schematisch dargestellte - Gasreinigung 17, bevor es über eine Rohrleitung 94 in die Atmosphäre gelangt.

Der Anreak 10 ist ähnlich wie der Aereak ausgebidet. Lediglich eine Gaszu- und Gasableitung fehlt. Vorhanden sind dagegen durch den Deckel hindurchgeführte Rohrleitungen 101 und 102 zum Zuführen von Lauge bzw. Säure und eine Rohrleitung 106 mit relativ großem Durchmesser etwa in der Deckelmitte zum Zuführen von Gülle. Im unteren Teil der Zylinderwand ist auch eine Rohrleitung 103 mit relativ großem Durchmesser zum Entnehmen von Gülle angeschlossen. Vorrichtungen 104 und 109, um den Reaktorinhalt zu rühren bzw. zu heizen, sind vorgesehen. Die Rohrleitung 106 verbindet den Anreak 8 mit dem Ausgang des BL-Aggregats 11. Außerdem mündet in die Rohrleitung 106 eine Rohrleitung 105, die von der Verbindungsleitung 120 abzweigt. In die Rohrleitung 103 ist eine Zelle 112 zur Messung des p_{H}-Werts eingebaut. Hinter der Zelle 112 zweigt eine Zweigleitung 113 ab, die in das BL-Aggregat 11 mündet. In die Zweigleitungen 113 und - nach deren Abzweigung - in die Rohrleitung 103 sind je eine Umlaufpumpe 117 bzw. 107 eingebaut.

Rohrleitungen 81 und 101 bzw. 82 und 102 verbinden den Aereak 8 bzw. den Anreak 10 mit einem Säurebehälter 14 und einem Laugenbehälter 15. Dosierventile 141 und 142 bzw. 151 und 152 steuern die Zufuhr von Säure und Lauge, die ihre Steuersignale von den p_{H}-Meßzellen 92 bzw. 112 erhalten.

Der Schlanreak 12 ist - wie die beiden anderen Reaktoren - ein zylinderförmiges Gefäß, dessen Zylinderachse senkrecht auf der Unterlage steht. Es weist durch den Zylinderdeckel hindurchgehende Rohrleitungen 121 und 122 mit relativ großem Durchmesser auf. Die Rohrleitung 121 zweigt von der Verbindungsleitung 120 ab und dient zum Zuleiten, während die relativ tief in den Schlanreak 12 hineinragende Rohrleitung 122, welche in die Verbindungsleitung 120 mündet, zum Ableiten von Gülle dient. In der Nähe des Bodens des Zylinders ist eine Rohrleitung 123 mit relativ großem Durchmesser zum Ablassen des Gefäßinhalts angeschlossen. Die Rohrleitung 123 ist normalerweise mit einem Bodenablassventil 17 verschlossen und mündet in die Nachbehandlungsanlage 13.

Bisher noch nicht erwähnte Absperrventile 18 sind in die Rohr- bzw. Zweigleitungen 93, 105, 113, 121, und 122 eingebaut. Zusätzlich befinden sich in der Verbindungsleitung 120 noch Absperrventile nach der Abzweigung der Rohrleitung 105 und vor und hinter der Einmündung der Rohrleitung 122. Schließlich ist in die Verbindungsleitung 120 ein Durchflußmesser 19 eingebaut.

Damit die mikrobiologische Behandlungsstufe optimal arbeiten kann, ist es erforderlich, daß die notwendigen Bakterienstämme in ausreichender Form vorhanden sind, um sowohl im aeroben als auch im anaeroben Milieu die in Güllen vorhandenen organischen und anorganischen Verbindungen, chemisch so zu zerlegen, daß sie danach chemischen Reaktionen zugänglich werden oder den Bakterien als Nahrung dienen können. Die für die mikrobiologische Behandlung benötigten Bakterien werden in den BL-Aggregaten 9 und 11 vermehrt und akkumuliert.

Die BL-Aggregate 9 und 11 sind identisch und haben die Form schlanker Zylinder mit senkrecht stehender Zylinderachse und einem Zulauf am oberen Ende und einem Ablauf am unteren Ende. Ihr Volumen beträgt etwa ein Zehntel des Volumens der zugehörigen Reaktoren. In dem Zylinder stehen Träger für die Biomasse, bzw. die Bakterien, beispielsweise dünne, unregelmäßig gewachsene Weichholzstangen, wie Raschigringe geformte - bevorzugt - keramische Hohlkörper oder aus nichtrostendem Stahl oder Kunststoff, wie Polyethylen oder Polypropylen, hergestellte Gitterkörper. Die Hohl- oder Gitterkörper sind mit Baumwollfasern oder Bimssteinen gefüllt. Zusätzlich enthalten die BL-Aggregate auch noch Katalysatoren, z.B. in Form von Quarz, mit denen hochmolekulare, organische Güllebestandteile gekrackt werden. Die Anbindung der BL-Aggregate 9 und 11 an den Aereak 8 bzw. den Anreak 10 wurde oben besprochen.

Bekannt ist, daß Bakterien bzw. Bakterienstämme nur dann überleben können, wenn die für sie spezifischen lebenserhaltenden Umweltbedingungen vorhanden sind. So kann die Gruppe der Aerobier (heterotrophe Bakterien des Belebtschlamms) nicht lange überleben, wenn sie neben dem Nahrungsangeboten nicht auch gelösten Sauerstoff in ausreichender Menge vorfindet (zu unterscheiden sind hiervon allerdings die 70 bis 90 % der heterotrophen Bakterien, welche fakultative Anaerobier (bei dem erfindungsgemäßen Verfahren insbesondere Entrobacter sakazakii, Citrobacter freundii, Escherichia vulnerisund Candida parapsilosis) sind, d.h. in der Lage sind, in Abwesenheit von gelöstem Sauerstoff von der O₂-Atmung - beispielsweise auf die Nitrat-Atmung überzugehen). Zwar können echte Anaerobier in einem sauerstoffhaltigen Medium lange überleben, aber sie werden sich nicht vermehren und auch nur einen kleinen oder gar keinen Stoffwechsel haben. Bakterienstämme aus den genannten drei Gruppen, die unter den Bedingungen der Gülleaufbereitung ihren Stoffwechsel haben und die dafür notwendigen Stoffe in der Gülle vorfinden, werden für die Aufarbeitung der Gülle benötigt und müssen selektiert und gezüchtet werden.

Es ist nicht möglich, die idealen Lebensbedingungen für die benötigten Bakterien nach Rezept schnell zu schaffen. Vielmehr kann den Bakterien nur ein Milieu geboten werden, dem sie sich innerhalb eines längeren Zeitraums derart anpassen können, daß ihr Stoffwechsel funktioniert und sie sich vermehren können. Besonders günstige Bedingungen für die mikrobiologische Behandlung sind dann gegeben, wenn eine sowohl der Art als auch der Menge nach optimal an die Gülle angepaßte Bakterienpopulation vorhanden ist.

Solche Bedingungen für die mikrobiologische Aufarbeitung sind dann gegeben, wenn die in den BL-Aggregaten akkumulierten Bakterien während der vorangehenden mikrobiologischen Behandlung einer Güllecharge aufgewachsen sind, die identisch zusammengesetzt war wie die nun vorliegende.

Um die Bakterienstämme zu erzeugen, wenn die Anlage erstmals in Betrieb genommen wird oder die Bakterien aus irgendwelchen Gründen abgestorben sind, läßt sich eine geeignete Bakterienpopulation in ausreichender Konzentration folgendermaßen erzeugen:

Die mikrobiologische Anlage wird teilweise mit Wasser gefüllt und das Wasser wird durch die Umlaufpumpen 87, 97, 107 und 117 ständig im Kreislauf gehalten und durch die p_{H}-Wertsteuerung konstant auf einem Wert zwischen 6,8 und 8,0 gehalten. Dem Wasser wird dann eine kleine Menge (0,2 bis 2 g) gelöste Zuckermelasse und eine Probe eines Bakterien enthaltenden Mediums zugefügt. Bei diesem Medium handelt es sich bevorzugt um Belebtschlamm, welcher bei einer früher aufgearbeiteten Güllecharge, die gleich zusammengesetzt war wie die, welche jetzt zur Aufarbeitung ansteht. Bevorzugt wird ein solcher Belebtschlamm, weil die in ihm vorhandene Bakterienpopulation bereits sehr gut an die aufzuarbeitende Gülle angepaßt ist. Bei dem Medium kann es sich allerdings auch um eine Belebtschlammprobe aus einer kommunalen Kläranlage handeln, in welcher Abwässer aus möglichst verschiedenartigen Quellen oder sogar um eine Flußwasserprobe handeln. Allerdings muß die Bakterienpopulation in dem Belebtschlamm aus der kommunalen Kläranlage und noch mehr die in der Flußwasserprobe erst an die Gülle angepaßt werden, bevor sie optimal zum mikrobiologischen Abbau eingesetzt werden können und diese Anpassung dauert umso länger je mehr sich die ursprünglich vorhandene Bakterienzusammensetzung von der optimal angepaßten unterscheidet.

Die Zuckermelassezugabe wird so oft wiederholt bis eine ausreichende Bakterienpopulation vorhanden ist. Während der Erzeugung der Bakterienstämme wird durch den Aereak 8 ständig Luft gepumpt (1,5 bis 6,01 Luft/lGülle). Dann wird der p_{H}-Wert auf einen Wert zwischen 8 und 9, bevorzugt etwa 8,5 erhöht, und die Fütterung erfolgt dann abwechselnd mit Zukkermelasse und chemisch vorbehandelter Gülle in Dosen zwischen 0,2 und 2 g in Zeitabständen von 18 bis 24 Stunden. Nach etwa 5 bis 7 Tagen wird dann der p_{H}-Wert auf den ursprünglichen Wert zurückgeführt. Ab diesem Zeitpunkt wird dann in noch größeren Zeitabständen von etwa 36 bis 48 Stunden und zwar nur noch chemisch vorbehandelte Gülle in einer Menge zwischen 50 und 100 ml zugegeben. Nach etwa vier Tagen bis einer Woche wird diese Streß-Phase beendet und anschließend wird für kurze Zeit relativ viel Zuckermelasse (zwischen 1 und 2 g) und Gülle (zwischen 300 und 500 ml) zugegeben.

Für sehr kurze Zeit (etwa 5 bis 20 Minuten) wird dann der p_{H}-Wert in einen Bereich > 12 verschoben in dem normalerweise kein mikrobiologisches Leben möglich ist, wobei offenbar die in der Gülle weniger lebensfähigen und damit weniger reaktiven Bakterien abgetötet werden und dadurch Platz für die besonders aktiven Bakterien gemacht wird.

Nachdem der p_{H}-Wert wieder auf seinen ursprünglichen Ausgangswert eingestellt worden ist, wird nur noch mit zunehmend größeren Mengen (von 100 bis 800 ml) chemisch vorbehandelter Gülle gefüttert. Der Abbauprozeß setzt zunächst nur zögernd ein, beschleunigt sich dann aber immer mehr, so daß der Selektions- und Zuchtprozeß nach gut vier Wochen beendet ist und die Anlage auf ihre Betriebsbedingungen eingestellt werden kann. Dieser Selektionsprozeß wird im aeroben Teil der Anlage bevorzugt bei Temperaturen zwischen etwa 19,5 und etwa 20,5 °C und im anaeroben Teil bevorzugt bei Temperaturen zwischen etwa 19 und etwa bis 24 °C durchgeführt. Sollen die Temperaturen in den beiden Teilen unterschiedlich sein, ist der Einbau von Wärmeaustauschern erforderlich. Warum die Einhaltung der Temperaturen wichtig ist, wird weiter unten im Zusammenhang mit der mikrobiologischen Behandlung der Gülle besprochen. Die genannten Temperaturen, welche auch bei der mikrobiologischen Behandlung von Gülle eingehalten werden, erlauben es während des größeren Teil des Jahres die Anlage ohne oder nur mit geringer Energiezufuhr zu betreiben.

Die während des beschriebenen Selektions- und Zuchtprozeß erzeugten Bakterien werden - bevorzugt in Form von Schlammpartikeln - an den Trägern für die Bakterienstämme akkumuliert und zwar die aeroben Bakterien im BL-Aggregat 9 und die anaeroben (und auch fakultativen) Bakterien im BL-Aggregat 11. Diese Trennung erfolgt deshalb, weil die anaeroben Bakterien die sauerstoffgesättigte Flüssigkeit im Aereak 8 und die aeroben (wenn man von den fakultativen absieht) Bakterien die sauerstoffarme Flüssigkeit im Anreak 10 nicht vertragen können.

Das Aufwachsen läuft so ab, daß sich Flocken, die reich an organischer und anorganischer Materie und an Bakterien sind, in der Flüssigkeit bilden, und beim Vorbeiströmen der Flüssigkeit an den Trägern auf diesen absetzen. Die Konzentration der Flocken in der Flüssigkeit korreliert, wenn man die Aufwachszeit berücksichtigt, mit der auf den Trägern akkumulierten Bakterienmenge. Aus der Bakterienmenge, die zu Beginn der Behandlung einer Charge von den Trägern an das Abwasser abgegeben wird und der bereis vor der Zugabe im Abwasser vorhandenen Konzentration der Schlammflocken ergibt sich die zum Abbau der Verunreinigungen in einer Abwassercharge zur Verfügung stehende Bakterienmenge. Diese wird für die mikrobiologische Behandlung einer mechanisch und chemisch behandelten, entkeimten und mikrobiologisch vorbehandelten Gülleprobe, deren Volumen gleich etwa 10 % des Rauminhalts der mikrobiologischen Reinigungsstufe ist, als brauchbar angesehen, wenn das Schlammabsetzvolumen in einer 100 ml-Probe nach 10 bis 30 Minuten Standzeit 15 bis 20 ml beträgt. Das angegebene Schlammabsetzvolumen ist bezogen auf eine mikrobiologische Behandlungsstufe, in der die Träger für die Bakterien in den BL-Aggregaten je acht, aus nichtrostendem Stahldraht hergestellte und mit Baumwollfasern gefüllte Gitterkörper und Holzstäbe sind, welche in den BL-Aggregaten verankert sind und an denen die Gitterkörper befestigt sind. Die Baumwolle wird im Handel, beispielsweise zum Verspinnen, angeboten. Die mikrobiologische Behandlungsstufe ist dabei durch die folgenden Parameter charakterisiert: Sie hat ein Innenvolumen von etwa 12 Liter und es können in ihr etwa 10 Liter Gülle behandelt werden. Jeder Gitterkörper hat Volumen von etwa 12 cm³ und die Oberfläche der Holzsttäbe liegt je bei etwa 12 cm². Die Baumwollfasern sind etwa 3-4 cm lang. Das oben angegebene Schlammabsetzvolumen charakterisiert die brauchbare Bakterienmenge auch dann, wenn die Anlage für die Behandlung größerer oder kleinerer Güllemengen ausgelegt ist, allerdings nur unter der Vorausetzung, daß die Trägerabmessungen entsprechend an die geänderte Güllemenge angepaßt ist.

Beim normalen Berieb wird - gegebenenfalls - mikrobiologisch vorbehandelte Gülle in die mikrobiologische Behandlungsstufe gebracht, die zu 9/10 mit bereits mikrobiologisch behandelter Gülle gefüllt ist. Die frische Gülle wird - bevorzugt - in den Aereak 8 gegeben.

Der gesamte Inhalt der Anlage wird mittels der Umwälzpumpen 87 und 107 umgewälzt und zwar normalerweise vom Aereak 8 über die Verbindungsleitung 120 und die Rohrleitung 105 zum Anreak 10, von diesem über die Rohrleitungen 103, die Verbindungsleitung 120 und die Rohrleitung 121 zum Schlanreak 12 und wieder über die Rohrleitung 122, die Verbindungsleitung 120 und die Rohrleitung 86 zurück zum Aereak 8. Dieser Materialfluß wird durch eine entsprechende Schaltung der Absperrventile in der Behandlungsanlage gewährleistet. Das Umwälzen erfolgt bevorzugt getaktet, d.h. die Umwälzpumpen stehen immer wieder längere Zeit, bevorzugt wischen 20 und 40 Minuten, damit die in den Reaktoren befindliche Güllemenge, die gerührt wird, in diesen Zeiten nur einer Art von Bakterien ausgesetzt ist, und anschließend an eine solche Zeit wird solange umgewälzt, bis der Inhalt eines Reaktors in den nächsten gefördert worden ist.

Ein kleiner Teil der Gülle wird ständig mittels der Umwälzpumpe 97 über die von der Verbindungsleitung 120 abzweigende Rohrleitung 93 durch das BL-Aggregat 9 und zurück zum Aereak 8 und mittels der Umwälzpumpe 117 über die von der Rohrleitung 103 abzweigende Rohrleitung 113 durch das BL-Aggregat 11 und zurück zum Anreak 12 geleitet.

Zu Beginn der Behandlung einer neuen Charge werden die Träger in den BL-Aggregaten mechanisch erregt, beispielsweise durch Ultraschall oder einen durchgeblasenen Luftstrom, wodurch ein großer Teil des auf dem Trägern akkumulierten, Bakterien haltigen Schlamms sich von den Trägern löst und von der Gülle aufgenommen wird. D.h. aerobe Bakterien werden in den Aereak 8 und anaerobe und fakultative Bakterien in den Anreak 10 gespült. Dadurch wird innerhalb sehr kurzer Zeit der frisch eingebrachten Gülle plötzlich eine sehr hohe Bakterienkonzentration angeboten, was einen sehr raschen Abbau der organischen Substanz in der frischen Gülle bewirkt.

Während dieses einige Stunden dauernden Abbaus, währenddem ständig Gülle durch die BL-Aggregate gepumpt wird, werden wieder Bakterien auf den Trägern in den BL-Aggregaten akkumuliert. Außerdem werden mittels der in mindestens einem der BL-Aggregate vorhandener Katalysatoren aus Quarz große organische Moleküle in der Gülle gekrackt. Die Gülle wird beim Umwälzen mittels der Umwälzpunmpen 87 und 107 zunächst im Aereak einem Luftstrom und aeroben, dann - sowohl im Anreak 10 als auch im Schlanreak 12 - anaeroben und fakultativen anaeroben Bakterien und im Aereak wieder aeroben Bakterien und einem Luftstrom ausgesetzt usw. Es ist dabei ausser auf die Einhaltung eines festgelegten p_{H}-Wertbereichs insbesondere auf die Einhaltung von Temperaturen innerhalb der oben angegebenen Temperaturbereiche von etwa 19,5 bis etwa 20,5 °C bzw. 19,5 bis 24°C zu achten. Bei Temperaturen unterhalb etwa 19 °C werden die Reaktionsgeschwindigkeiten zu langsam.

Daß die oberen Temperaturgrenzen eingehalten werden sollten, hängt damit zusammen daß die Reaktion von NO₃- zu N₂ sehr langsam verläuft und auch durch eine Temperaturerhöhung nicht wesentlich beschleunigt wird. Der Abbau zu Ammoniak sowohl im Aereak als auch im Anreak und die Oxidation des Ammoniak zu Nitrat im Aereak verlaufen schnell und ihre Reaktionsgeschwindigkeit ist stark temperaturabhängig. Werden deshalb die Temperaturen in den Reaktoren erhöht, erhöht sich die Nitratkonzentration in der mikrobiologischen Stufe stark. Dies können die Bakterien nicht vertragen. Sie sterben ab oder stellen zummindesten den Stoffwechsel ein. Steigt der Nitratwert für längere Zeit (rund 6 Stunden) auf einen Wert von mehr als 100 mg/l an, so besteht die Gefahr, daß die Bakterienkulturen - vor allen Dingen aber fakultative Anaerobier - großen Schaden nehmen und ggf. absterben. Der gesamte Abbauprozess kommt dann zum Stillstand.

Da also Ammonium und Nitrat die beiden Substanzen sind, die die Anlage zum "Umkippen" bringen können, müssen - etwa stündlich - Proben aus dem Aereak entnommen und der Ammonium- und Nitratgehalt bestimmt werden. Eine ausreichend genaue Bestimmung ist mit der Teststäbchen-Methode möglich, wobei beispielsweise die von der Firma E. Merck angebotene "Merck Ammonium Test, Art.Nr. 10024" und "Merck Nitrat (e) Test, Art.Nr. 10020" verwendbar sind. Neben dem Ammonium- und dem Nitratgehalt sollte der Phosphatgehalt kontrolliert werden, um ein Absinken des Phosphatwerts auf unter 10 mg/l Gülle zu verhindern, wobei das von der Firma E. Merck angebotene Prüfbesteck "Phosphor-Test, Art.Nr. 14840" verwendet werden kann. Außerdem ist es für die sichere Überwachung des Prozesses günstig, wenn zu Beginn und am Ende der Chargenbehandlung die Ammonium-, Nitrat- und Phosphatwerte photometrisch genauer bestimmt werden.

Da bei höheren Konzentrationen Ammonium und Nitrat für Bakterien Gifte sind, sollte darauf geachtet werden, daß die Konzentration dieser Ionen weder für sich genommen noch in Kombination Werte von 100 mg/l Gülle überschreiten. Diese Werte sind - s.o. - nur durch eine Temperaturregulierung im Aereak und im Anreak zu steuern. Es ist deshalb zweckmäßig, wenn diese beiden Reaktoren mit Heiz- bzw. Kühleinrichtungen ausgestattet sind. Speziell bei Beginn einer Chargenbehandlung ist damit zu rechnen, daß die Temperatur in den Reaktoren, wenn nicht gegengesteuert wird, bis auf 24 °C ansteigen. Der Anstieg ist abhängig von der organischen Fracht und dem Ammoniumgehalt der chemisch und mikrobiologisch vorbehandelten Gülle, die in die Hauptanlage eingebracht wird (Eine andere Möglichkeit, die mikrobiologischen Reaktionen zu drosseln besteht darin, Schlamm aus der Behandlungsstufe - gegebenenfalls temporär - aus der Gülle, beispielsweise durch Zwischenlagern im Schlanreak, zu entfernen). Natürlich ist dieses Problem umso kleiner, je kleiner die Menge der Gülle ist, welche in die mikrobiologische Anlage eingebracht wird.

Damit das Ammonium zu Nitrat reagiert, muß der p_{H}-Wert oberhalb 6,2 liegen und Luft in den Aereak 8 eingeblasen werden. Soweit ein unterer Grenzwert nicht unterschritten wird (erfahrungsgemäß etwa 2 bis 3,5 Liter Luft pro Stunde und Liter Gülle) ist es unwichtig, welche Luftmengen eingeblasen werden. Wichtig ist aber, daß die eingeblasene Luft in der Gülle sehr fein verteilt wird.

Nach etwa 5 bis 7 Stunden Behandlungsdauer ist in einer mikrobiologisch wie oben beschrieben behandelten und danach chemisch nachbehandelten Probe kein Nitrat mehr nachzuweisen und Ammonium nur noch in Spuren vorhanden. Der CSB-Wert liegt bei Werten zwischen 250 und 450 mg/l Lösung. D.h. die mikrobiologische Behandlung ist damit erfolgreich abgeschlossen. Die Keimzahl in der - schlammhaltigen - aufgearbeiteten Gülle liegt größenordnungsmäßig bei 10 bis 15 Millionen Keimen/ ml Gülle.

Soweit die Abbauprodukte schlammförmig sind, sammeln sie sich - aufgrund der beträchtlich über dem Boden angebrachten Öffnung der Rohrleitung 122 bevorzugt im Schlanreak 12. Ist die Schlammkonzentration im Schlanreak 12 relativ hoch angestiegen, so wird Schlamm durch Öffnen des Austrittsventils 17 abgelassen. Dazu läßt man den Schlamm sich zunächst absetzen, was man erreicht, indem man den Schlanreak 12 durch Sperren der Rohrleitung 121 und Öffnen des Stücks der Verbindungsleitung 120 zwischen den Rohrleitungen 121 und 122 von der Umwälzung abkoppelt und dadurch eine Flüssigkeitsberuhigung im Schlanreak 12 erreicht. Dabei ist allerdings wichtig, daß nicht zuviel Schlamm entfernt wird, da die Schlammpartikel als wichtigste Bakterienträger dienen, welche besonders hohe, lokale Bakterienkonzentrationen ermöglichen.

Gasförmige Abbauprodukte werden zusammen mit der Abluft vom Aereak 8 über die Rohrleitung 85 ausgetragen und durchlaufen vor dem Austritt die Waschanlage 17, in der schädliche bzw. unangenehm riechende Gase absorbiert werden. Nach dem vollständigen Abbau der organischen Bestandteile der Gülle wird etwa 1/10 des Inhalts an die Nachbehandlung abgegeben, wodurch Platz für die nächste, zu behandelnde Güllecharge geschaffen wird.

Die Nachbehandlungsstufe 13 kann eine offene Wanne sein, in welche die von der mikrobiologischen Anlage abzweigende Rohrleitung 123 mündet, und welche am Boden einen Abfluß zum Dekanter 16 hat. Das sehr einfache Verfahren wurde bereits oben beim Überblick über den Gesamtprozeß besprochen. Das im Dekanter 16 abgetrennte Wasser darf aufgrund seiner Reinheit in natürliche Gewässer eigeleitet werden. Der im Dekanter 16 abgetrennte Schlamm wird mit dem im Dekanter 4 gewonnenen Schlamm vereinigt und bildet die Basis für einen Wirtschaftsdünger, der noch mit andersgearteten Abfällen angereichert bzw. für spezille Anwendungen konditioniert werden kann.

Die Teile der Anlage bestehen aus Materialien, welche beim Bau von Anlagen für die Abwasserbehandlung üblicherweise eingesetzt werden.

Zur weiteren Erläuterung der Erfindung werden im folgenden zwei spezielle Ausführungsbeispiele beschrieben. Sie sollen in keiner Weise den Erfindungsgegenstand einschränken. Bei beiden Beispielen geht es um die Aufarbeitung von Gülle. Bei der verwendeten Anlage handelt es sich um eine Modellanlage, deren mikrobiologische Behandlungsstufe oben im Zusammenhang mit der Charakterisierung der brauchbaren Bakterienmenge durch das Schlammabsetzvolumen beschrieben worden ist. Die erzielten Ergebnisse lassen sich auf wesentlich größere Anlagen, z.B. auf bewegliche Anlagen mit einem Fassungsvermögen von typischerweise einigen 100 l und auf solche für größere landwirtschaftliche Betriebe mit einem typischen Fassungsvermögen von mehreren 1000 l übertragen.

Im ersten Beispiel wird das erstmalige Aufwachsen von Bakterien für die Gülleaufarbeitung auf den als Träger dienenden Mitteln in den BL-Aggregaten 9 und 11 beschrieben. Das zweite Beispiel beschreibt das Aufarbeiten einer Güllecharge.

### Beispiel 1

Zum Aufbau der erforderlichen Bakterienkonzentrationen in den BL-Aggregaten wurde die entleerte mikrobiologische Behandlungsstufe teilweise mit Wasser gefüllt und dieses Wasser wurde durch Pumpen ständig zirkuliert. Der pH-Wert wurde automatisch durch Zugabe von Säure oder Lauge auf 7,1 bis 7,3 gehalten. Zu dem Wasser wurde dann ca. 1 g gelöste Zuckermelasse und danach 1 Liter frischer Belebtschlamm zugegeben, der bei einer kürzlich mikrobiologisch aufgearbeiteten Güllecharge angefallen war. Anschließend wurde der Phosphatgehalt mittels des von der Firma E. Merck angebotene Prüfbestecks "Phosphor-Test, Art.Nr. 14840" überprüft, der unter 30 mg/l lag, weshalb soviel von einer Dinatriumhydrogenphosphatlösung zugefügt wurde, daß der Phosphatwert bei etwa 35 mg/l lag. Nach kurzer Zeit ließ sich mittels einer Bestimmung des Melassegehalts festzustellen, daß die im Belebtschlamm vorhandenen Bakterienkulturen das angebotene Futter annehmen. Die Betriebstemperatur wurde auf Werten zwischen 19,8 und 20,2°C, gehalten.

Die Fütterung mit Melasse (jeweils ca. 0,4g/l Lösung) wurde in den folgenden Tagen fortgesetzt. In regelmäßigen Zeitabständen wurden der Ammonium- und Nitratgehalt der Lösung bestimmt. Ausreichend genaue Bestimmungen ließen sich mit der Teststäbchen-Methode durchführen, beispielsweise mit den von der Firma E. Merck angebotenen "Merck Ammonium Test, Art.Nr. 10024" und "Merck Nitrat (e) Test, Art.Nr. 10020". Ein Ansteigen des Ammonium- und/oder Nitratgehalts wurde gestoppt, indem die Temperatur kurzzeitig auf minimal 15°C abgesekt wurde und/oder Schlamm im Schlanreak zwischengelagert wurde, so daß die Summe aus Ammonium- und Nitratgehalt den Wert von 100 mg/l Lösung in keinem Fall überschritt.

Die Fütterung allein mit Melasse wurde nach dem vierten Tag beendet. Danach wurde täglich eine Futterration gegeben, die sich zusammensetzte aus ca. 0,2 g Zuckermelasse und 100 ml chemisch vorbehandelter Gülle aus einer früheren mikrobiologisch vorbehandelten Güllecharge. Während dieser eine Woche dauernden Phase wurde der p_{H}-Wert zwischen 8,5 und 8,7 gehalten. Danach wurde der p_{H}-Wert auf den Ausgangswert 7,1 bis 7,3 zurückgefahren. In der nachfolgenden Woche wurde dann nur zweimal mit je 50 ml chemisch vorbehandelter Gülle gefüttert. Nach dieser Stressphase wurde mit relativ viel Zuckermelasse (ca. 2 g/l) und ca. 400 ml chemisch vorbehandelter Gülle innerhalb von 2 Tagen gefüttert. Anschließend wurde ein Tag nicht gefüttert.

Am folgenden Tag wurde der p_{H}-Wert für maximal 15 Minuten in einen Bereich gesteuert (> 12), in dem theoretisch kein mikrobiologisches Leben mehr möglich ist. Danach wurde der p_{H}-Wert auf den Ausgangswert zurückgefahren.

Nach diesem Zeitpunkt wurde täglich mit chemisch vorbehandelter Gülle gefüttert, wobei die Tagesmenge allmählich von 100 ml auf 400 ml gesteigert wurde. Das Wachstum und die Selektion der Bakterien war nach gut 4 Wochen beendet und die Anlage damit betriebsbereit. Das Kriterium dafür war, daß 6 Stunden nach Zugabe von 800 ml mechanisch und chemisch vorbehandelter, entkeimter und mikrobiologisch vorbehandelter Gülle eine aus der mikrobiologischen Behandlungsstufe entnommene und chemisch nachbehandelte Probe nitratfrei war, lediglich Ammoniumspuren enthielt und einen CSB-Wert von etwa 300 mg/l Lösung hatte.

### Beispiel 2

Etwa 0,8 l Rohgülle, die etwa 7,4 Mio. Keime/ml enthielt, wurde mit einem Magnesiumsalz behandelt, um Ammonium und Phosphat als Magnesiumammoniumphosphat (MgNH₄PO₄) auszufällen. Die Festlegung der Menge des Fällungsmittels erfolgte auf Grund einer Analyse, die mit einer Probe der entkeimten und von Feststoffen befreiten Gülle durchgeführt wurde. Vor der Ausfällung wurde der p_{H}-Wert der Gülle mit Natronlauge auf 8,5 eingestellt. Es wurde für die 0,8 l Gülle 3,4 ml 50%ige Natronlauge pro 800 ml Gülle verbraucht. Nachdem der p_{H}-Wert von 8,5 erreicht war, wurde abwechselnd in Wasser gelöstes Magnesiumsulfat und Natronlauge in solchen Mengen zugegeben, daß der p_{H}-Wert nicht unter 8,0 abfiel. Es wurde soviel Magnesiumsalz zugegeben, daß etwa 30 mg Phosphat pro Liter Gülle als Restgehalt in der Gülle verblieb. Nachdem das Magnesiumsalz vollständig zugegeben war, wurde der p_{H}-Wert noch einmal genau auf 8,5 eingestellt. Daraufhin wurde 30 Minuten lang gerührt und anschließend wurde die feste von der flüssigen Phase, beispielsweise durch Dekantieren, getrennt.

Zum Entkeimen wurde dann die Gülle in die Entkeimungsanlage gebracht. Die Gülle wurde umgepumpt und dabei 1,5 Stunden mit einer 100 Watt-Lampe bestrahlt. Nach etwa einer halben Stunde Bestrahlung wurde der p_{H}-Wert durch Ansäuern auf einen Wert von etwa 4 abgesenkt. Die beim Ansäuern freiwerdenden güllespezifischen Geruchsstoffe wurden in die mikrobiologische Behandlungsstufe geleitet. Nach der Bestrahlung mit der 100 Watt-Lampe wurde noch eine weitere Stunde bis zum Beginn der mikrobiologischen Vorbehandlung mit einer 40 Watt-Lampe weiterbestrahlt.

Die entkeimte Gülle, die noch etwa 40 000 Keime/ml enthielt, wurde dann mikrobiologisch vorbehandelt und wurde dazu in den Behälter für die mikrobiologische Vorbehandlung gebracht und mit 80 ml Gülle geimpft, die der mikrobiologischen Behandlungsstufe entnommen worden war. Anschließend wurde der p_{H}-Wert der Gülle mit H₂SO₄ auf etwa 5,8 eingestellt. Während der Vorbehandlung wurde darauf geachtet, daß der p_{H}-Wert 6,0 nicht überschritt und die Temperatur auf 16 bis 21°C gehalten wurde. Während der etwa 6 Stunden dauernden Vorbehandlung, wurde die Gülle mit einer Umwälzpumpe durchmischt und alle 45 Minuten wurde sie 2 Minuten lang mit etwa 2 l Luft/Min. belüftet. Nach der mikrobiologische Vorbehandlung war die Keimzahl wieder auf 550 000/ml gestiegen. Die abströmende Luft wurde in die mikrobiologische Anlage geleitet.

Die mikrobiologische Behandlungsstufe, in welche die Gülle nunmehr geleitet wurde, enthielt etwa 9,2 l bereits aufgearbeitete Gülle. Zuvor waren 0,8 l aufgearbeitete Gülle und Belebtschlamm aus der Behandlungsstufe entnommen worden. Die zu dem Aereak bzw. dem Anreak gehörenden BL-Aggregate, enthielten die bei der Behandlung der vorhergehenden Güllecharge akkumulierten Bakterien.

Um die durch die Zugabe der zu behandelnden Gülle verursachte Schwächung bzw. das Ungleichgewicht des bakteriellen Gleichgewichts möglichst schnell wieder auszugleichen, wurde Schlamm, der Bakterien in hoher Konzentration enthielt, aus den BL-Aggregaten in die zugeordneten Reaktoren mittels der zwischen den Reaktoren und dem zugehörigen BL-Aggregat umlaufenden Gülle in die Reaktoren gespült, wobei das Beladen der Gülle mit dem Schlamm durch mechanische Erregung der genannten als Träger dienenden Mittel durch Ultraschall oder mittels eines Luftstrom unterstützt wurde. Es sei an dieser Stelle angemerkt, daß die kurz-dauernde mechanische Erregung mittels eines Luftstroms auch in dem zum Anreak gehörenden BL-Aggregat angewandt werden kann.

In der Anlage wurde der p_{H}-Wert automatisch durch Zugabe entsprechender Mengen 1,2%iger Natronlauge bzw. Schwefelsäure auf einem Wert zwischen 7,1 und 7,3 gehalten. Die Temperatur in der Anlage wurde auf einen Wert zwischen 19,8 und 20,2 °C eingestellt, dies war zu Beginn des Abbaus nur durch Kühlung erreichbar.

Der Ammonium-, Nitrat- und Phosphatgehalt der Flüssigkeit in der Anlage wurde im Abstand von jeweils einer Stunde mittels der oben erwähnten Methoden kontrolliert. Zu Beginn und am Ende der Chargenbehandlung wurden die Ammonium-, Nitrat- und Phosphatwerte photometrisch genau bestimmt. Es wurde darauf geachtet, daß der Wert von 30 mg Phosphat/l Gülle nicht unterschritten wurde und daß die Werte für Ammonium und Nitrat weder für sich genommen noch in Kombination 100 mg/l Gülle überschritten. Näherten sich die Werte dieser oberen Grenze, wurde ein Überschreiten dadurch verhindert, daß die Temperatur der Flüssigkeit kurzzeitig unter 19,8°C abgesenkt und/oder Schlamm aus dem Kreislauf entfernt wurde.

In den Aereak 8, in dem ein Überdruck von 0,2 Bar herrschte, wurde während der ganzen Behandlung Luft eingeblasen, die in der Gülle sehr fein verteilt wurde, wobei die eingeblasene Menge bei etwa 30 l Luft/Stunde lag. Während der ganzen mikrobiologischen Behandlung wurde Gülle vom Aereak 8 zum BL-Aggregat 9 und zurück in den Aereak bzw. vom Anreak 10 zum BL-Aggregat 11 und zurück in den Anreak gepumpt. Das Umpumpen der Gülle vom Aereak 8 zum Anreak 10 und vom Anreak 10 über den Schlanreak 12 zurück zum Aereak 8 wurde in Abständen von etwa einer halben Stunde jeweils nur so lange aufrechterhalten, bis die gesamte Güllemenge im Aereak und damit entsprechend in den beiden anderen Reaktoren ausgetauscht war.

Nach 6 Stunden Behandlungsdauer war in einer chemisch nachbehandelten (s.u.) Probe der behandelten Gülle kein Nitrat mehr nachzuweisen und Ammonium nur noch in Spuren vorhanden. Der CSB-Wert lag bei 450 mg/l Lösung. Die Flüssigkeit entsprach damit in ihrer Qualität den gesetzlichen Anforderungen, die Wasser erfüllen muß, wenn es in das kommunale Abwassernetz eingeleitet werden soll. Die mikrobiologische Behandlung war somit erfolgreich abgeschlossen (Keimzahl am Ende der mikrobiologischen Behandlung 12,5 Mio./ml).

Für die chemische Nachbehandlung wurden 0,8 Liter aufgearbeitete Gülle und beim Abbau entstandener Schlamm der mikrobiologischen Behandlungsstufe entnommen und in die Nachbehandlungsstufe 13 eingebracht. Zunächst wurde die mikrobiologisch behandelte Gülle mit 0,5 ml 3,2 %iger Fe(III)-Chloridlösung versetzt. Anschließend wurde noch Kalkmilch zugesetzt, bis ein pH-Wert von 7,6 erreicht war. Der dabei entstandene Schlamm wurde zusammen mit dem im Schlanreak 12 angesammelten Schlamm in dem Dekanter 16 von der Flüssigkeit abgetrennt. Der Schlamm, welcher nicht nur eine reichhaltige Bodenmikrobiologie aufwies, sondern auch frei von Krankheitskeimen war, wurde mit den bei der mechanichen und chemischen Behandlung angefallenen Feststoffen und anderen organischen Abfallprodukten vereinigt und zu Wirtschaftsdünger konditioniert. Mit diesem Behandlungsschritt war die Gülleaufbereitung abgeschlossen.

Mit der beschriebenen Ausführungsform des erfindungsgemäßen Verfahrens lassen sich hochbelastete Abwässer, wie z. B. Gülle in überraschend kurzer Zeit in der Weise reinigen, daß das verbleibende Wasser den gesetzlichen Anforderungen (WHG) entspricht und kann in das kommunale Abwassernetz eingeleitet werden.

Wird das verbleibende Wasser einer ultrafiltration oder Umkehrosmose unterzogen, so steht danach ein Wasser für Industriezwecke zur Verfügung.

Dieses Ergebnis läßt sich insbesondere durch das Zusammenwirken der Stufen: chemische Vorbehandlung, Entkeimung, mikrobiologische Vorbehanslung, mikrobiologische Behandlung und chemische Nachbehandlung erzielen. Der technische Aufwand und die erforderliche Energiezufuhr sind dabei relativ gering. Von einer kleinen mobilen Einheit bis zur großen Industrieanlage lassen sich alle Baugrößen mit diesem Anlagentyp verwirklichen.

Die gewonnenen Feststoffe können ohne weitere Behandlung oder zusammen mit anderen Abfallstoffen zu Wirtschaftsdünger konditioniert dem landwirtschaftlich genutzten Boden zurückgegeben werden. Die Konditionierung ermöglicht es dabei, den Wirtschaftsdünger regional - gegebenenfalls sogar für den einzelnen Landwirt - für den zu bewirtschaftenden Boden zu optimieren.

Alternativ können die aus der Gülle gewonnen Feststoffe auch allein oder zusammen mit anderen Stoffen, z.B. aus der Lebensmittelindustrie, einer Kompostierung zugeführt werden.

Schließlich ist es auch möglich, die gewonnenen Wertstoffe allein oder zusammen mit anderen organischen Abfällen zur Gewinnung von Biogas einem Faulungsprozeß zu unterwerfen.

## Patentansprüche

1. Anlage zum Aufarbeiten von organische und anorganische Materie enthaltendem Abwasser mit einer mikrobiologischen Behandlungsstufe, durch welche das Abwasser strömt und welche mindestens ein Aggregat aufweist, das Mittel enthält, auf deren Oberfläche Bakterien sich vermehren und akkumulieren können, wobei die Mittel die Bakterien kontrolliert an das Abwasser abgeben können, dadurch gekennzeichnet, daß die Anlage zum chargenweisen Aufarbeiten des Abwassers dient, und daß mindestens ein mikrobiologischer Reaktor mit einem Zufluß und einem Abfluß für das Abwasser vorgesehen ist, der gegebenenfalls belüftet werden kann, und an den das genannte Aggregat mindestens mittels einer separaten, bevorzugt aus einer Ringleitung bestehenden Verbindung angekoppelt ist, über die Abwasser vom Reaktor zum Aggregat und umgekehrt geleitet werden kann, wobei die Mittel umspült werden.

2. Anlage nach Anspruch 1, dadurch gekennzeichnet, daß die Mittel organische und/oder anorganische, bevorzugt in der Natur vorkommende Stoffe enthalten.

3. Anlage nach Anspruch 2, dadurch gekennzeichnet, daß die Mittel aus dünnen, unregelmäßig geformten Weichholzstangen, mit Baumwolle und/oder Bimssteinen gefüllten Hohlkörpern oder mit Baumwolle gefüllten und aus nichtrostendem Stahl oder einem Kunststoff, wie Polyethylen oder Polypropylen, hergestellten Gitterkörpern bestehen, wobei die letzteren an Holzstäben befestigt sind.

4. Anlage nach einem der Ansprüche 1 bis 3, dadurch gekennzeichnet, daß in der mikrobiologischen Behandlungsstufe zwei je mit einem der genannten Aggregate verbundene Reaktoren vorgesehen sind, von denen der eine belüftet ist, wobei der Abfluß des einen Reaktors mit dem Zufluß des anderen und umgekehrt verbunden ist und außerdem ein Zufluß zu der mikrobiologischen Behandlungsstufe und ein Abfluß aus ihr vorhanden sind und daß gegebenenfalls ein dritter in die Verbindungsleitung zwischen dem unbelüfteten und dem belüfteten Reaktor einkoppelbarer, unbelüfteter Reaktor vorgesehen ist, dem keines der genannten Aggregate zugeordnet ist und in den der genannte Abfluß integriert ist.

5. Anlage nach einem der Ansprüche 1 bis 4, dadurch gekennzeichnet, daß der mikrobiologischen Behandlungsstufe eine mechanische und eine chemische Behandlungsstufe und gegebenenfals eine Entkeimungsanlage und/oder eine mikrobiologische Vorbehandlungsstufe vorgeschaltet und eine chemische Nachbehandlungsstufe nachgeschaltet sind.

6. Anlage nach einem der Ansprüche 1 bis 5, dadurch gekennzeichnet, daß Pumpen vorgesehen sind, um das Abwasser zwischen dem genannten Aggregat und seinem zugehörigen Reaktor und/oder zwischen den Reaktoren zu zirkulieren.

7. Verfahren zum Aufarbeiten von organische und anorganische Materie enthaltendem, durch eine mikrobiologische Behandlungsstufe strömendem Abwasser insbesondere unter Verwendung einer Anlage nach einem oder mehreren der Ansprüche 1 bis 6, dadurch gekennzeichnet, daß das Abwasser chargenweise behandelt wird, daß in einer mikrobiologischen Behandlungsstufe, durch die das aufzuarbeitende Abwasser strömt, ein in der mikrobiologischen Behandlungsstufe abgezweigter Teil des Abwassersstroms Mittel umspült, auf deren Oberfläche Bakterien durch Vermehren und Akkumulieren aufgewachsen sind, und daß dabei - gegebenenfalls unter Anwendung mechanischer Energie - Bakterien kontrolliert von den Mitteln abgelöst und in das umspülende Abwasser gebracht werden, wobei das Vermehren und Akkumulieren der Bakterien auf den genannten Mitteln bei der vorangehenden bzw. den vorangehenden mikrobiologischen Behandlungen von Abwasserchargen durchgeführt worden sind, die im wesentlichen identisch wie das zu reinigende Abwasser zusammengesetzt waren, so daß die aufgewachsenen Bakterien an das aufzuarbeitende Abwasser angepaßt sind.

8. Verfahren nach Anspruch 7, dadurch gekennzeichnet, daß das Abwasser zwischen einem belüfteten und mindestens einem unbelüfteten Reaktor zirkuliert wird, wobei die Zirkulation bevorzugt getaktet erfolgt, indem sie für festgelegte Zeitspannen unterbrochen wird, und wobei jeweils mit einem Teil des Abwassers die genannten Mittel in den zugehörigen Aggregaten umspült werden.

9. Verfahren nach Anspruch 7 oder 8, dadurch gekennzeichnet, daß die Bakterien beim Aufwachsen im wesentlichen denselben Behandlungsbedingungen unterworfen werden wie das genannte aufzuarbeitende Abwasser.

10. Verfahren nach einem der Ansprüche 7 bis 9, dadurch gekennzeichnet, daß zum erstmaligen Aufwachsen der Bakterien auf den Mitteln zunächst eine wässrige, organische und ggf. anorganische, bevorzugt stickstoffarme Materie enthaltende Nährflüssigkeit zusammen mit einer Mischung, die Bakterien enthält, welche die organische und teilweise die anorganinische Materie in dem genannten, abzubauenden Abwasser abzubauen vermögen, in die mikrobiologische Behandlungsstufe gebracht wird, daß diese Flüssigkeit im wesentlichen denselben - jedoch den unterschiedlichen Ausgangsbedingungen angepaßten - mikrobiologischen Behandlungbedingungen, wie das genannte aufzuarbeitende Abwasser unterworfen wird, und daß, nachdem der Abbau der Materie begonnen hat, der Nährflüssigkeit eine Probe Abwasser zugemischt wird die im wesentlichen gleich wie das genannte, abzubauende Abwasser zusammengesetzt ist, und im weiteren Verlauf des Bakterienwachstums bevorzugt die mengenmäßige Zusammensetzung der Nährflüssigkeit in festgelegter Weise in Richtung eines zunehmend größeren Anteils des genannten zugemischten Abwassers geändert wird, wobei in Abweichung von den Bedingungen der mikrobiologi-schen Behandlung während des Bakterienwachstums bevorzugt für festgelegte Zeitdauern der p_{H}-Wert über den für die mikrobiologische Behandlung festgelegten Wert hinaus erhöht wird, und daß anschließend die Mittel nur noch Abwasserchargen ausgesetzt werden, die im wesentlichen gleich wie das aufzuarbeitende Abwasser zusammengesetzt sind.

11. Verfahren nach einem der Ansprüche 7 bis 10, dadurch gekennzeichnet, daß das Abwasser an Quarzkörpern vorbeigeleitet wird, die in mindestens einem der Aggregate vorhanden sind.

12. Verfahren nach einem der Ansprüche 7 bis 11, dadurch gekennzeichnet, daß nach Abschluß der mikrobiologischen Behandlung, nur ein Teil des behandelten Abwassers und des entstandenen Schlamms aus der mikrobiologischen Behandlungsstufe entfernt wird, anschließend das freigewordene Volumen mit noch nicht aufgearbeitetem Abwasser aufgefüllt wird, und dann die mikrobiologische Behandlung erneut durchgeführt wird.

13. Verfahren nach Anspruch 12, dadurch gekennzeichnet, daß etwa 2,5 bis etwa 30 Vol.% des Abwassers und des entstandenen Schlamms entfernt werden.

14. Verfahren nach einem der Ansprüche 7 bis 13, dadurch gekennzeichnet, daß die Bakterien von den Mitteln nur am Anfang der mikrobiologischen Behandlung abgelöst werden.

15. Verfahren nach einem der Ansprüche 7 bis 14, dadurch gekennzeichnet, daß vor der mikrobiologischen Behandlung aus dem Abwasser zunächst die Feststoffe und daraufhin chemisch und/oder physikalisch-chemisch fällbare Verbindungen entfernt werden, daß das Abwasser gegebenenfalls entkeimt und einer mikrobiologischen Vorbehandlung unterworfen wird, und daß nach der mikrobiologischen Behandlung noch einmal chemisch und/oder physikalisch-chemisch fällbare Verbindungen entfernt werden, wobei beim physikalischchemischen Ausfällen bevorzugt Flockungsmittel eingesetzt werden.

16. Verfahren nach einem der Ansprüche 7 bis 15, dadurch gekennzeichnet, daß zur Steuerung der mikrobiologischen Reaktionen die Temperaturen und gegebenenfalls die Schlammmenge in dem aufzuarbeitenden Abwasser variiert werden.

17. Verfahren nach einem der Ansprüche 7 bis 16, dadurch gekennzeichnet, daß das Abwasser ausgewählt ist aus der Gruppe Sickerwässer, insbesondere Fäkalien enthaltende Sickerwässer, Güllen und Jauchen.

18. Verfahren nach einem der Ansprüche 7 bis 17, dadurch gekennzeichnet, daß die bei der mikrobiologischen Reinigung und ggf. bei der mechanischen und/oder chemischen Behandlung und/oder chemischen Nachbehandlung anfallenden Feststoffe zu Wirtschaftdünger weiterverarbeitet und ggf. durch Zumischen weiterer Materie zu vorherbestimmten Wirtschaftsdüngerspezialitäten konditioniert werden oder der Kompostierung zugeführt oder einem Faulungsprozeß unterworfen werden.

## Claims

1. Installation for working up waste water containing organic and inorganic subject with a microbiological treatment stage, which the waste water is flowing through and which has at least one aggregate, which contains mediums on their surface bacteria can multiply and accumulate, while the mediums can deliver the bacteria controlled to the waste water, which is characterized by the way, that the installation serves to work up the waste water charged and that at least one microbiological reactor with one flowing in and one flowing off for the waste water is previewed, which can be ventilated if it need be and to which the named aggregate is coupled with a separat junction, which is preferably composed of an annular conduction, which can conduct the waste water from the reactor to the aggregate and the other way, while the mediuns are rinsed round.

2. Installation according to claim 1, which is characterized by the way, that mediums contain organic and/or inorganic materials, preferably found in the natur.

3. Installation according to claim 2, which is characterized by the way, that the mediums are composed by latticed bodies formed by irregular soft wood-poles with cotton and/or pumice-stone filled hollow bodies or with plastic material like Polyethylen or Polypropylen, while the latters are fixed on wood sticks.

4. Installation according to one of the claims 1 until 3, which is characterized by the way, that in the microbiological treatment stage two reactors are previewed, while each of them is connected with one of the named aggregates, while one of them is ventilated and the flowing off of one reactor is connected with the flowing in of the other one and the other way and besides exists one flowing in to the microbiological treatment stage and one flowing off out of it and that if it need be a third unventilated reactor is previewed, which is able to be coupled into the junction-main between the unventilated and the ventilated reactor, to which none of the named aggregates is accorded and in which the named flowing off is integrated.

5. Installation according to one of the claims 1 until 4, which is characterized by the way, that to the microbiological treatment stage a mechanical and a chemical treatment stage and if it need be a sterilizing installation and/or a microbiological pre-treatment stage are precontrolled and a chemical post-treatment stage is postcontrolled.

6. Installation according to one of the claims 1 until 5, which is characterized by the way, that pumps are previewed to circulate the waste water between the named aggregate and its belonging to reactor and/or between the reactors.

7. Procedure to work up waste water containing organic and inorganic material and flowing through a miocrobiological treatment stage especially by using an installation according to one or more claims 1 until 6, which is characterized by the way, that the waste water is charged treated, that in the microbiological treatment stage, where the worked up waste water is flowing, one branched off part of the waste water stream rinses round the mediums, on which surface bacteria is growing up by multiplying and accumulating and that there - if it need be by using of mechanical energie - bacteria are controlled detached of the mediums and brought into the rinsing round waste water, while the multiplying and accumulating of the bacteria on the named mediums by the preceding treatment or the preceding treatments of the waste water charges is executed, which are essentially identically composed than the purified waste water, so that the growing up bacteria is adapted to the worked up waste water.

8. Procedure according to claim 7, which is characterized by the way, that the waste water is circulated between one ventilated and at least one unventilated reactor, while the circulation happens preferably cadenced, while respectively with one part of the waste water the named mediums are rinsed round in the according aggregates

9. Procedure according to claim 7 or 8, characterized by the way, that the bacteria while growing up are essentially submitted to the same treatment conditions than the named worked up waste water.

10. Procedure according to one of the claims 7 until 9, which is characterized by the way, that for the first growing up of the bacteria on the mediums first an aqueous, organic and if it need be inorganic preferably poor in nitrogen material containing nutrive liquid together with a mixture, which contains bacteria which are able to reduce the organic and partly the inorganic material in the named to be reduced waste water is brought into the microbiological treatment stage, that this liquid is essentially submitted to the same - however adapted to the different start conditions - microbiological treatment conditions than the named worked up waste water, and that alter the reduce of the material has begun a taste of this waste water is mixed up to the nutrive liquid taste, which is essentially composed the same way than the named worked up waste water and which is changed on the furthr sequel of the growing up of the bacteria in a fixed way in direction of an increasing part of the named mixed up waste water, while in difference to the condition of the microbiological treatment while the growing up of the bacteria preferably for fixed periods the pH-value is increased above the fixed value for the microbiological treatment and that subsequently the mediums are only exposed to waste water charges, which are essentially composed the same way than the worked up waste water.

11. Procedure according to one of the claims 7 until 10, which is characterized by the way, that the waste water is conducted along quartz bodies, which are present at least in one of the aggregates.

12. Procedure according to one of the claims 7 until 11, which is characterized by the way, that alter the microbiological treatment, only one part of the treated waste water and the resulting mud is removed out of the microbiological treatment stage, subsequently the becoming free volume is filled up with the not yet worked up waste water and then the microbiological treatment is practiced again.

13. Procedure according to claim 12, which is characterized by the way, that perhaps 2,5 until perhaps 30 vol% of the waste water and the resulting mud are removed.

14. Procedure according to one of the claims 7 until 13, which is characterized by the way, that the bacteria are detached from the mediums only at the beginning of the microbiological treatment.

15. Procedure according to one of the claims 7 until 14, which is characterized by the way, that before the microbiological treatment first solid material and then chemical and/or physical-chemical drawn combinations are removed out of the waste water, that the waste water if it need be is sterilized and submitted to a microbiological pre-treatment and that after the microbiological treatment once more chemical and/or physical-chemical drawn combinations are removed, while for the physical-chemical drawing preferably flocky mediums are used.

16. Procedure according to one of the claims 7 until 15, which is characterized by the way, that for the regulation of the microbiological reactions the temperatures and if it need be the mud quantity is varied in the worked up waste water.

17. Procedure according to one of the claims 7 until 16, which is characterized by the way, that the waste water is chosen out of the group of the water leakages, especially water leakages containing feces, animal's excrements and liquid manure.

18. Procedure according to one of the claims 7 until 17, which is characterized by the way, that the resulting solid materials of the microbiological purification and if it need be of the mechanical and/or chemical treatment and/or chemical post-treatment are finished to economical dung and if it need be by mixing up with other material are conditioned to determined special economical dung or are delivered to the composting or are submitted to a rotten process.

## Revendications

1. Installation pour épurer des eaux d'égout, contenant de la matière organique et minérale avec un traitement microbiologique, qui est traversée par les eaux d'égout et qui possède un agrégat, qui contient des moyens, sur les surfaces desquels des bactéries peuvent se multiplier et s'accumuler, où les moyens peuvent remettre les bactéries d'une manière contrôlée aux eaux d'égout, une installation, qui est marquée de cette façon, qu'elle est utilisée pour l'épuration chargée des eaux d'égout, et qu'au moins un réacteur microbiologique avec une amenée et un écoulement pour les eaux d'égout est prévu, qui à l'occasion peut être aéré et auquel l'agrégat est attaché par le moyen d'un assemblage séparé, étant composé de faveur d'une conduite annulaire, par laquelle des eaux d'égout peuvent être conduites du réacteur à l'agrégat et inversement, où les moyens sont baignés.

2. Installation d'après revendication 1, caractérisée par les moyens contenant des matières organiques et/ou minérales, de faveur se trouvant dans la nature.

3. Installation d'après revendication 2, caractérisée par les moyens, qui sont composés de minces perches en bois souple, formées irrégulièrement, dont les corps creux sont remplis du coton et/ou des pierres ponces, ou qui sont composés des corps grillagés remplis de coton ou d'acier inoxydable ou d'une matière plastique, comme polyéthylen ou polypropylen, où les derniers sont fixés aux bâtons en bois.

4. Installation d'après une des revendications 1 jusqu'à 3, caractérisée de façon que dans le traitement microbiologique on a prévu deux réacteurs, dont chacun est lié avec un des agrégats nommés, dont l'un des deux est aéré ou l'écoulement d'un réacteur est joint à l'amenée de l'autre et inversement et en plus il existe une amenée au traitement microbiologique et un écoulement de lui qu'à l'occasion on a prévu un troisième réacteur inaéré, qui peut être accouplé à la conduite de jonction entre le réacteur inaéré et le réacteur aéré, auquel on n'a pas accordonné aucun des agrégats nommés et auquel l'écoulement nommé est intégré.

5. Installation d'après une des revendications 1 jusquà 4, caractérisée de façon, qu'on a préréglé au traitement microbiologique un traitement mécanique et un traitement chimique et à l'occasion une apparation de stérilisation et/ou un prétraitement microbiologique et qu'on a réglé ultièrement un traitement ultérieur.

6. Installation d'après une des revendication 1 jusqu'à 5, caractérisée de façon qu'on a prévu des pompes pour faire circuler les eaux d'égout entre l'agrégat nommé et le réacteur qui va avec et/ou entre les réacteurs.

7. Procédé pour l'épuration des eaux d'égout contenant de la matière organique et minérale, traversant un traitement microbiologique en utilisant une installation d'après une ou plusieurs revendications 1 jusqu'à 6, caractérisé de façon que les eaux d'égout sont traitées d'une façon chargée, que dans un traitement microbiologique, traversé par les eaux d'égout, qui sont à épurer pendant le traitement microbiologique une partie dérivée du courant des eaux d'égout baigne des moyens, sur leur surface des bactéries ont grandies en se multipliant et s'accumulant et que en même temps - à l'occasion en utilisant de l'énergie mécanique - des bactéries sont détachées d'une manière contrôlée des moyens et mises dans les eaux d'égout baignées, où la multiplication et l'accumulation des bactéries sur les moyens nommés sont exécutées chez le ou bien les traitement(s) microbiologique(s) en avant des charges des eaux d'égout, qui étaient essentiellement composées d'une manière identique que les eaux d'égout à purger de cette façon que les bactéries à grandir sont adaptées aux eaux d'égout à épurer.

8. Procédé d'après revendication 7 caractérisé de façon que les eaux d'égout sont circulées entre un réacteur aéré et au moins un réacteur où la circulation est effectuée de préférence en cadence, de façon qu'elle est arrêtée pour un laps de temps fixé et où chaque fois avec une partie des eaux d'égout les moyens nommés sont baignés dans les agrégats y appartenant.

9. Procédé d'après revendication 7 ou 8, étant caractérisé de façon que les bactéries en grandissant sont essentiellement soumises aux mêmes conditions de traitement que les eaux d'égout nommées qui sont à épurer.

10. Procédé d'après une des revendications 7 jusquà 9, caractérisé de façon, que pour le premier grandissement des bactéries sur les moyens d'abord une liquide alimentaire aqueuse contenant de la matière organique et à l'occasion minérale de préférence pauvre en azote avec un mélange, qui contient des bactéries qui peuvent décomposer la matière organique et partiellement minérale des eaux d'égout nommées à décomposer est mise dans le traitement microbiologique, que cette liquide est essentiellement soumise aux mêmes - pourtant aux différentes conditions de départ adaptées - conditions de traitement microbiologique auxquelles les eaux d'égout nommées à épurer sont soumises et que après la décomposation de la matière a commencé, on mélange à la liquide alimentaire un échantillon des eaux d'égout qui est essentiellement composé de la même façon que les eaux d'égout nommées à épurer et par la suite du grandissement des bactéries de préférence la composition quantitative de la liquide alimentaire est changée d'une manière fixée envers une position grandissante des eaux d'égout nommées et mélangées ou en déclinaison des conditions du traitement microbiologique pendant le grandissement des bactéries de préférence pour des durées fixes la valeur-pH est augmentée par-dessus la marche de la valeur fixée pour le traitement microbiologique et qu'après les moyens ne sont exposés qu'aux charges des eaux d'égout qui sont essentiellement composées de la même façon que les eaux d'égout à épurer.

11. Procédé d'après une des revendications 7 jusquà 10, caractérisé de façon qu'on fait passer les eaux d'égout le long des corps de quartz qui au moins se trouvent dans un des agrégats.

12. Procédé d'après une des revendications 7 jusqu'à 11 caractérisé de façon qu'à la fin du traitement microbiologique on n'enlève qu'une partie des eaux d'égout traitées et de la boue qui en résulte, après on remplit le volume qui s'est libéré avec des eaux d'égout pas encore épurées et alors on refait le traitement microbiologique.

13. Procédé d'après revendication 12, caractérisé de façon qu'on enléve environ 2,5 jusqu'à 30 % volume des eaux d'égout et de la boue qui en résulte.

14. Procédé d'après une des revendications 7 jusqu'à 13, caractérisé de façon qu'on enlève les bactéries des moyens seulement au début du traitement microbiologique.

15. Procédé d'après une des revendications 7 jusqu'à 14, caractérisé de façon qu'on enlève d'abord avant le traitement microbiologique les matériaux solides des eaux d'égout et après des combinaisons chimiquement et/ou physico-chimiquement précipitantes qu'on stérilise à l'occasion les eaux d'égout et les soumet à un prétraitement microbiologique et qu'on enlève après le traitement microbiologique encore une fois des combinaisons chimiquement et/ou physico-chimiquement précipitantes où on utilise de préférence pour la précipitation chimique des moyens qui font des flocons.

16. Procédé d'après une des revendications 7 jusqu'à 15, caractérisé de façon qu'on varie pour le réglage des réactions microbiologiques les températures et à l'occasion la quantité de la boue dans les eaux d'égout à épurer.

17. Procédé d'après une des revendications 7 jusqu'à 16 caractérisé de façon qu'on choisit les eaux d'égout du groupe des eaux de filtrage surtout des eaux de filtrage contenant des excréments, des eaux-vannes, des purins.

18. Procédé d'après une des revendications 7 jusqu'à 17 caractérisé de façon qu'on traite ultérieurement les matériaux solides occasionnels chez le nettoyage microbiologique et à l'occasion chez le traitement mécanique et/ou chimique et/ou chez le traitment chimique ultérieur à l'engrais économique et qu'on à l'occasion les conditionne en mélangeant d'autre matière à l'engrais économique spécialisé prédestiné ou qu'on les approvisionne à la compostation ou les soumet au procédé de décomposition.
